# EUROPEAN PATENT APPLICATION

(11) **EP 4 482 123 A1**
(43) Date of publication of application: **25.12.2024**
(21) Application number: 24769221.3
(22) Date of filing: 03.04.2024
(51) Int. Cl.: H04L 67/54, G06F 9/48

(54) **METHOD FOR DISCOVERING EDGE APPLICATION SERVER, AND RELATED DEVICE**

(30) Priority: 11.04.2023 CN 202310426582
(71) Applicant: HUAWEI TECHNOLOGIES CO., LTD., Shenzhen, Guangdong 518129 (CN)
(72) Inventor: HU, Yajie, Shenzhen Guangdong 518129 (CN)
(74) Representative: Pfenning, Meinig & Partner mbB
(86) International application number: PCT/CN2024/086072
(87) International publication number: WO 2024/212870

(57) **Abstract**

Embodiments of this application provide an edge application server discovery method and a related device. In the method, an S-EES may receive a first message from a T-EES, where the first message may be used to determine at least one EAS, and the at least one EAS corresponds to a first application An EAS corresponding to the first application may be discovered in an EAS discovery procedure, to effectively ensure that the EAS discovered in the EAS discovery procedure can provide a service for the first application in a terminal.

## Description

This application claims priority to Chinese Patent Application No. 202310426582.9, filed with the China National Intellectual Property Administration on April 11, 2023 and entitled "EDGE APPLICATION SERVER DISCOVERY METHOD AND RELATED DEVICE", which is incorporated herein by reference in its entirety.

### TECHNICAL FIELD

This application relates to the field of communication technologies, and in particular, to an edge application server discovery method and a related device.

### BACKGROUND

Currently, 3GPP SA6 is researching a multi-access edge computing (multi-access edge computing, MEC) technology. An edge data network (Edge Data Network, EDN) deployed based on the MEC technology may provide a service for an application in a terminal by using an edge application server (Edge Application Server, EAS). However, an EAS discovered in an existing EAS discovery procedure may not be able to provide a service for a particular application in the terminal. Therefore, how to ensure that the EAS discovered in the EAS discovery procedure can provide the service for the particular application in the terminal is an urgent problem to be resolved.

### SUMMARY

Embodiments of this application provide an edge application server discovery method and a related device, to ensure that an EAS discovered in an EAS discovery procedure can provide a service for a particular application in a terminal.

According to a first aspect, an embodiment of this application provides an edge application server discovery method. The method may be applied to a source edge enabler server (Source Edge Enabler Server, S-EES), or may be applied to a chip in an S-EES, or may be applied to a logic module or software that can implement all or some S-EES functions. The following uses the S-EES as an example for description. The method includes: an S-EES receives a first message from a target edge enabler server (Target Edge Enabler Server, T-EES), where the first message is used to determine at least one EAS, and the at least one EAS corresponds to a first application.

Optionally, the method according to the first aspect may be applied to an EAS discovery procedure in an application context relocation process.

Optionally, the at least one EAS is an EAS associated with the T-EES, and there is an EAS corresponding to the first application in the at least one EAS. The first application is a particular application in a terminal (for example, an application that is in a terminal and that currently needs to perform application context relocation, or an application currently served by an S-EAS).

Optionally, the first message may include at least one of an EAS discovery response (EAS discovery response) message, an EAS discovery subscription response (EAS discovery subscription response) message, an EAS discovery subscription update response (EAS discovery subscription update response) message, or a service discovery response message.

It can be learned from the method in the first aspect that the S-EES may determine, based on the first message, the EAS corresponding to the first application. The EAS corresponding to the first application may be discovered in an EAS discovery procedure of the application context relocation process, to effectively ensure that the discovered EAS can provide a service for the first application in the terminal. In this way, an EES discovery failure is avoided, repeated execution of an EES discovery procedure is avoided, a service interruption delay is reduced, and user experience of an application is improved.

With reference to the first aspect, in an optional implementation, the first message indicates a correspondence between the at least one EAS and the first application. Optionally, the first message may not indicate the correspondence between the at least one EAS and the first application. Instead, first indication information indicates the correspondence between the at least one EAS and the first application. It should be noted that the first indication information may be carried in the first message, or may be carried in another message. This is not limited. It can be learned that, in this implementation, the S-EES may directly determine, based on the correspondence, the EAS corresponding to the first application.

With reference to the first aspect, in an optional implementation, the first message includes at least one of an application identifier corresponding to an EAS and an EAS bundle identifier corresponding to the EAS.

With reference to the first aspect, in an optional implementation, after that an S-EES receives a first message from a T-EES, the method further includes: The S-EES determines, from the at least one EAS based on an application identifier of the first application and the application identifier corresponding to the EAS, an EAS corresponding to the first application.

With reference to the first aspect, in an optional implementation, after that an S-EES receives a first message from a T-EES, the method further includes: The S-EES determines, from the at least one EAS based on an EAS bundle identifier corresponding to the first application and the EAS bundle identifier corresponding to the EAS, an EAS corresponding to the first application.

With reference to the first aspect, in an optional implementation, before that an S-EES receives a first message from a T-EES, the method further includes: The S-EES sends an EAS discovery request message to the T-EES, where the EAS discovery request message is used to request to obtain the at least one EAS from the T-EES, and the first message is an EAS discovery response message.

With reference to the first aspect, in an optional implementation, the EAS discovery request message includes at least one of the following information: the application identifier of the first application and an EAS bundle identifier corresponding to the first application. It can be learned that the S-EES may send the application message of the first application to the T-EES via the EAS discovery request message, so that the T-EES determines, based on the application identifier of the first application and/or the corresponding EAS bundle identifier, the EAS corresponding to the first application.

With reference to the first aspect, in an optional implementation, before that the S-EES sends an EAS discovery request message to the T-EES, the method further includes: The S-EES receives a second message from an edge configuration server (Edge Configuration Server, ECS), where the second message is used to determine at least one EES, an EAS associated with the at least one EES corresponds to the first application, the at least one EES corresponds to the first application, and the at least one EES includes the T-EES.

Optionally, the implementation method may be applied to an EES discovery procedure in an application context relocation process.

Optionally, the at least one EES is an EES on the ECS, and there is an EES associated with the EAS corresponding to the first application in the at least one EES.

Optionally, the second message may include at least one of an EES discovery response message, an EES discovery subscription response (EES discovery subscription response) message, an EES discovery subscription update response (EAS discovery subscription update response) message, and a service discovery response message.

It can be learned that, in this implementation, the S-EES may determine, based on the second message, the EES associated with the EAS corresponding to the first application, and may discover, in the EES discovery procedure in the application context relocation process, the EES associated with the EAS corresponding to the first application, to effectively ensure that the EAS in the EES discovered in the EES discovery procedure in the application context relocation process can provide a service for the first application in the terminal, so that an EES discovery failure is avoided, repeated execution of the EES discovery procedure is avoided, a service interruption delay is reduced, and user experience of the application is improved.

With reference to the first aspect, in an optional implementation, the second message further indicates a correspondence between the first application and the EAS associated with the at least one EES. Optionally, the second message may not indicate the correspondence between the first application and the EAS associated with the at least one EES. Instead, second indication information indicates the correspondence between the first application and the EAS associated with the at least one EES. The second indication information may be carried in the second message, or may be carried in another message. This is not limited. It can be learned that, in this implementation, the S-EES may directly determine, based on the correspondence, the EES associated with the EAS corresponding to the first application.

With reference to the first aspect, in an optional implementation, the second message includes at least one of the application identifier corresponding to the EAS associated with the at least one EES and the EAS bundle identifier corresponding to the EAS associated with the at least one EES.

With reference to the first aspect, in an optional implementation, after that the S-EES receives a second message from an ECS, the method further includes: The S-EES determines, from the at least one EES based on the application identifier of the first application and the application identifier corresponding to the EAS associated with the EES, the EES associated with the EAS corresponding to the first application.

With reference to the first aspect, in an optional implementation, after that the S-EES receives a second message from an ECS, the method further includes: The S-EES determines, from the at least one EES based on the EAS bundle identifier corresponding to the first application and the EAS bundle identifier corresponding to the EAS associated with the EES, an EES associated with the EAS corresponding to the first application.

With reference to the first aspect, in an optional implementation, before that the S-EES receives a second message from an ECS, the method further includes: The S-EES sends an EES discovery request message to the ECS, where the EES discovery request message is used to request to obtain at least one EES from the ECS; and the second message is an EES discovery response message.

With reference to the first aspect, in an optional implementation, the EES discovery request message includes at least one of the following information: the application identifier of the first application and the EAS bundle identifier corresponding to the first application. It can be learned that the S-EES may send the application identifier of the first application and/or the corresponding EAS bundle identifier to the ECS via the EES discovery request message, so that the ECS determines, based on the application identifier of the first application and/or the EAS bundle identifier, the EES associated with the EAS corresponding to the first application.

Optionally, in an optional implementation, before that the S-EES sends an EAS discovery request message to the T-EES, the method further includes: The S-EES receives an EAS discovery request message from an S-EAS.

Optionally, in an optional implementation, the EAS discovery request message includes at least one of the following information: the application identifier of the first application and the EAS bundle identifier corresponding to the first application. It can be learned that the S-EES may send the application identifier of the first application and/or the corresponding EAS bundle identifier to the S-EES via the EAS discovery request message.

Optionally, in an optional implementation, after that an S-EES receives a first message from a T-EES, the method further includes: The S-EES sends an EAS discovery response message to the S-EAS. It can be learned that, in this implementation, the S-EES may forward the EAS discovery response message to the S-EAS, so that the S-EAS determines the EAS corresponding to the first application, and after the S-EAS transmits application context to the T-EAS, when an AC is connected to the T-EAS, the T-EAS determines, based on at least one of an application identifier of the T-EAS and an EAS bundle identifier corresponding to the T-EAS, an EAS bundle required by the AC, and invokes an EAS in the EAS bundle to provide a service for the AC.

According to a second aspect, an embodiment of this application provides another edge application server discovery method. The method may be applied to a T-EES, or may be applied to a chip in the T-EES, or may be applied to a logical module or software that can implement all or some T-EES functions. The following uses the T-EES as an example for description. The method includes: A T-EES sends a first message to an S-EES, where the first message is used to determine at least one EAS, and the at least one EAS corresponds to a first application.

Optionally, the method according to the second aspect may be applied to an EAS discovery procedure in an application context relocation process.

It can be learned from the method according to the second aspect that the T-EES may send the first message to the S-EES, so that the S-EES determines, based on the first message, an EAS corresponding to the first application, and discovers the EAS corresponding to the first application in the EAS discovery procedure in the application context relocation process, to effectively ensure that the discovered EAS can provide a service for the first application in a terminal. In this way, an EES discovery failure is avoided, repeated execution of an EES discovery procedure is avoided, a service interruption delay is reduced, and user experience of an application is improved.

With reference to the second aspect, in an optional implementation, the first message further indicates a correspondence between the at least one EAS and the first application. It can be learned that, in this implementation, the T-EES may send the correspondence between the at least one EAS and the first application to the S-EES, so that the S-EES directly determines, based on the correspondence, the EAS corresponding to the first application.

With reference to the second aspect, in an optional implementation, before that a T-EES sends a first message to an S-EES, the method further includes: The T-EES determines, based on an application identifier of the first application and an application identifier corresponding to an EAS, an EAS corresponding to the first application.

With reference to the second aspect, in an optional implementation, before that a T-EES sends a first message to an S-EES, the method further includes: The T-EES determines, based on an EAS bundle identifier corresponding to the first application and an EAS bundle identifier corresponding to the EAS, the EAS corresponding to the first application.

With reference to the second aspect, in an optional implementation, the first message includes at least one of an application identifier corresponding to an EAS and an EAS bundle identifier corresponding to the EAS. It can be learned that, in this implementation, the T-EES may send, to the S-EES, the application identifier and/or the EAS bundle identifier corresponding to the EAS associated with the T-EES, to help the S-EES determine, from the EAS associated with the T-EES based on the application identifier and/or the EAS bundle identifier, the EAS corresponding to the first application.

With reference to the second aspect, in an optional implementation, before that a T-EES sends a first message to an S-EES, the method further includes: The T-EES receives an EAS discovery request message from the S-EES, where the EAS discovery request message is used to request to obtain at least one EAS from the T-EES, and the first message is an EAS discovery response message.

With reference to the second aspect, in an optional implementation, the EAS discovery request message includes at least one of the following information: the application identifier of the first application and the EAS bundle identifier corresponding to the first application. It can be learned that the T-EES may obtain the application identifier or the corresponding EAS bundle identifier of the first application via the EAS discovery request message, so as to determine, based on the application identifier of the first application or the corresponding EAS bundle identifier, the EAS corresponding to the first application.

According to a third aspect, an embodiment of this application provides still another edge application server discovery method. The method may be applied to an ECS, or may be applied to a chip in an ECS, or may be applied to a logical module or software that can implement all or some ECS functions. The following uses the ECS as an example. The method includes: An ECS sends a second message to an S-EES, where the second message is used to determine at least one EES, an EAS associated with the at least one EES corresponds to a first application, and the at least one EES corresponds to the first application.

Optionally, the method according to the third aspect may be applied to an EES discovery procedure in an application context relocation process.

It can be learned from the method according to the third aspect that the ECS may send the second message to the S-EES, so that the S-EES determines, based on the second message, an EES associated with an EAS corresponding to the first application, and the EES associated with the EAS corresponding to the first application may be discovered in the EES discovery procedure in the application context relocation process, to effectively ensure that the EAS in the EES discovered in the EES discovery procedure in the application context relocation process can provide a service for the first application in the terminal, so that an EES discovery failure is avoided, repeated execution of the EES discovery procedure is avoided, a service interruption delay is reduced, and user experience of the application is improved.

With reference to the third aspect, in an optional implementation, the second message further indicates a correspondence between the first application and the at least one EAS associated with the EES. It can be learned that, in this implementation, the ECS may send, to the S-EES, the correspondence between the first application and the EAS associated with the at least one EES, so that the S-EES directly determines, based on the correspondence, the EES associated with the EAS corresponding to the first application.

With reference to the third aspect, in an optional implementation, before that an ECS sends a second message to an S-EES, the method further includes: The ECS determines, based on an application identifier of the first application and an application identifier corresponding to the EAS associated with the EES, an EES associated with the EAS corresponding to the first application.

With reference to the third aspect, in an optional implementation, before that an ECS sends a second message to an S-EES, the method further includes: The ECS determines, based on an EAS bundle identifier corresponding to the first application and an EAS bundle identifier corresponding to the EAS associated with the EES, an EES associated with the EAS corresponding to the first application.

With reference to the third aspect, in an optional implementation, the second message includes at least one of the application identifier corresponding to the EAS associated with the at least one EES and the EAS bundle identifier corresponding to the EAS associated with the at least one EES. It can be learned that, in this implementation, the ECS may send, to the S-EES, the application identifier and/or the EAS bundle identifier corresponding to the EAS associated with the EES in the ECS, to help the S-EES determine, from the at least one EES based on the application identifier and/or the EAS bundle identifier, an EES associated with the EAS corresponding to the first application.

With reference to the third aspect, in an optional implementation, before that an ECS sends a second message to an S-EES, the method further includes: The ECS receives an EES discovery request message from the S-EES, where the EES discovery request message is used to request to obtain the at least one EES from the ECS; and the second message is an EES discovery response message.

With reference to the third aspect, in an optional implementation, the EES discovery request message includes at least one of the following information: the application identifier of the first application and the EAS bundle identifier corresponding to the first application. It can be learned that the ECS may obtain the application identifier of the first application and/or the corresponding EAS bundle identifier via the EES discovery request message, so as to determine, based on the application identifier of the first application and/or the corresponding EAS bundle identifier, the EES associated with the EAS corresponding to the first application.

According to a fourth aspect, an embodiment of this application provides still another edge application server discovery method. The method may be applied to an S-EAS, or may be applied to a chip in an S-EAS, or may be applied to a logical module or software that can implement all or some S-EAS functions. The following uses the S-EAS as an example. The method includes: An S-EAS sends an EAS discovery request message to an S-EES, where the EAS discovery request message is used to request at least one EAS, and the at least one EAS corresponds to a first application.

Optionally, the method according to the fourth aspect may be applied to an EAS discovery procedure in an application context relocation process.

It can be learned from the method according to the fourth aspect that the S-EAS may send the EAS discovery request message to the S-EES, so as to trigger execution of an EES discovery procedure and/or an EAS discovery procedure.

With reference to the fourth aspect, in an optional implementation, after that the S-EAS sends an EAS discovery request message to an S-EES, the method further includes: The S-EAS receives an EAS discovery response message from the S-EES, where the EAS discovery response message is used to determine the at least one EAS.

With reference to the fourth aspect, in an optional implementation, the EAS discovery response message further indicates a correspondence between the at least one EAS and the first application. It can be learned that, in this implementation, the S-EAS may directly determine, based on the correspondence, an EAS corresponding to the first application.

With reference to the fourth aspect, in an optional implementation, the EAS discovery response message includes at least one of an application identifier corresponding to an EAS and an EAS bundle identifier corresponding to the EAS.

With reference to the fourth aspect, in an optional implementation, after that the S-EAS receives an EAS discovery response message from the S-EES, the method further includes: The S-EAS determines, from the at least one EAS based on an application identifier of the first application and an application identifier corresponding to the EAS, an EAS corresponding to the first application.

With reference to the fourth aspect, in an optional implementation, after that the S-EAS receives an EAS discovery response message from the S-EES, the method further includes: The S-EES determines, from the at least one EAS based on an EAS bundle identifier corresponding to the first application and the EAS bundle identifier corresponding to the EAS, an EAS corresponding to the first application.

With reference to the fourth aspect, in an optional implementation, the EAS discovery request message includes at least one of the following information: the application identifier of the first application and the EAS bundle identifier corresponding to the first application. It can be learned that, in this implementation, the S-EAS may send the application identifier of the first application and/or the corresponding EAS bundle identifier to the S-EES via the EAS discovery request message, so that the S-EES obtains the application identifier of the first application and/or the corresponding EAS bundle identifier

According to a fifth aspect, an embodiment of this application provides still another edge application server discovery method. The method may be applied to an EEC, or may be applied to a chip in an EEC, or may be applied to a logical module or software that can implement all or some EEC functions. The following uses the EEC as an example. The method includes: An EEC receives a third message from an ECS, where the third message is used to determine at least one EES, an EAS associated with the at least one EES corresponds to a second application, and the at least one EES corresponds to the second application.

Optionally, the method according to the fifth aspect may be applied to an initial EES discovery procedure.

Optionally, the second application may be any application in a terminal, and the second application may be the same as or different from a first application.

Optionally, the third message may include at least one of an edge computing platform discovery response message, an edge computing platform discovery subscription response message, an edge computing platform discovery subscription update response message, and a service discovery response message.

It can be learned from the method according to the fifth aspect that the EEC may determine, based on the third message, an EES associated with the EAS corresponding to the second application, to effectively ensure that the EAS associated with the EES discovered in the initial EES discovery procedure can provide a service for the second application, so that an EES discovery failure is avoided, repeated execution of the EES discovery procedure is avoided, a service interruption delay is reduced, and use experience of the application is improved. In addition, it can also be effectively ensured that the EAS discovered in the initial EAS discovery procedure can provide a service for the second application in the terminal, so that an EAS discovery failure is avoided, repeated execution of the EAS discovery procedure is avoided, a service interruption delay is reduced, and use experience of the application is improved.

With reference to the fifth aspect, in an optional implementation, the third message further indicates a correspondence between the second application and the EAS associated with the at least one EES. Optionally, the third message may not indicate the correspondence between the second application and the EAS associated with the at least one EES. Instead, third indication information indicates the correspondence between the second application and the EAS associated with the at least one EES. It should be noted that the third indication information may be carried in the edge computing platform discovery response message, or may be carried in another message. This is not limited. It can be learned that, in this implementation, the EEC may directly determine, based on the received correspondence, the EES associated with the EAS corresponding to the second application.

With reference to the fifth aspect, in an optional implementation, the third message includes at least one of the application identifier corresponding to the EAS associated with the at least one EES and the EAS bundle identifier corresponding to the EAS associated with the at least one EES.

With reference to the fifth aspect, in an optional implementation, after that an EEC receives a third message from an ECS, the method further includes: The EEC determines, from the at least one EES based on an application identifier of the second application and an application identifier corresponding to the EAS associated with the EES, an EES associated with the EAS corresponding to the second application.

With reference to the fifth aspect, in an optional implementation, after that an EEC receives a third message from an ECS, the method further includes: The EEC determines, from the at least one EES based on an EAS bundle identifier corresponding to the second application and an EAS bundle identifier corresponding to the EAS associated with the EES, an EES associated with the EAS corresponding to the second application.

With reference to the fifth aspect, in an optional implementation, before that an EEC receives a third message from an ECS, the method further includes: The EEC sends an edge computing platform discovery request message to the ECS, where the edge computing platform discovery request message is used to request to obtain the at least one EES from the ECS; and the third message is an edge computing platform discovery response message.

With reference to the fifth aspect, in an optional implementation, the edge computing platform discovery request message includes at least one of the following information: the application identifier of the second application and the EAS bundle identifier corresponding to the second application. It can be learned that the EEC may send the application identifier of the second application/or the corresponding EAS bundle identifier to the ECS via the edge computing platform discovery request message, so that the ECS determines, based on the application identifier of the second application and/or the corresponding EAS bundle identifier, the EES associated with the EAS corresponding to the second application.

According to a sixth aspect, an embodiment of this application provides still another edge application server discovery method. The method may be applied to an ECS, or may be applied to a chip in an ECS, or may be applied to a logical module or software that can implement all or some ECS functions. The following uses the ECS as an example. The method includes: An ECS sends a third message to an EEC, where the third message is used to determine at least one EES, the at least one EES corresponds to a second application, and the at least one EES corresponds to the second application.

Optionally, the method according to the sixth aspect may be applied to an initial EES discovery procedure.

It can be learned from the method according to the sixth aspect that the ECS may send the third message to the EEC, so that the EEC determines the at least one EES based on the third message, and may discover the at least one EES in the initial EES discovery procedure. An EAS associated with the EES corresponds to the second application, to effectively ensure that the EAS associated with the EES discovered in the initial EES discovery procedure can provide a service for the second application, so that an EES discovery failure is avoided, repeated execution of the EES discovery procedure is avoided, a service interruption delay is reduced, and use experience of the application is improved. In addition, it can also be effectively ensured that the EAS discovered in the initial EAS discovery procedure can provide a service for the second application in the terminal, so that an EAS discovery failure is avoided, repeated execution of the EAS discovery procedure is avoided, a service interruption delay is reduced, and use experience of the application is improved.

With reference to the sixth aspect, in an optional implementation, the third message further indicates a correspondence between the second application and the EAS associated with the at least one EES. It can be learned that, in this implementation, the ECS may send, to the EEC, the correspondence between the second application and the EAS associated with the at least one EES, so that the EEC directly determines, based on the correspondence, the EES associated with the EAS corresponding to the second application.

With reference to the sixth aspect, in an optional implementation, before that an ECS sends a third message to an EEC, the method further includes: The ECS determines, based on an application identifier of the second application and an application identifier corresponding to the EAS associated with the EES, the EES associated with the EAS corresponding to the second application.

With reference to the sixth aspect, in an optional implementation, before that an ECS sends a third message to an EEC, the method further includes: The ECS determines, based on an EAS bundle identifier corresponding to the second application and an EAS bundle identifier corresponding to the EAS associated with the EES, the EES associated with the EAS corresponding to the second application.

With reference to the sixth aspect, in an optional implementation, the third message includes at least one of the application identifier corresponding to the EAS associated with the at least one EES and the EAS bundle identifier corresponding to the EAS associated with the at least one EES. It can be learned that, in this implementation, the ECS may send, to the EEC, the application identifier and/or the EAS bundle identifier corresponding to the EAS associated with the EES in the ECS, so that the EEC determines, based on the application identifier and/or the EAS bundle identifier, the EES associated with the EAS corresponding to the second application.

With reference to the sixth aspect, in an optional implementation, before that an ECS sends a third message to an EEC, the method further includes: the ECS receives an edge computing platform discovery request message from the EEC, where the edge computing platform discovery request message is used to request to obtain the at least one EES from the ECS; and the third message is an edge computing platform discovery response message.

With reference to the sixth aspect, in an optional implementation, the edge computing platform discovery request message includes at least one of the following information: the application identifier of the second application and the EAS bundle identifier corresponding to the second application. It can be learned that the ECS may obtain the application identifier of the second application and/or the corresponding EAS bundle identifier via the edge computing platform discovery request message, so as to determine, based on the application identifier of the second application and/or the EAS bundle identifier, the EES associated with the EAS corresponding to the second application.

According to a seventh aspect, an embodiment of this application provides still another edge application server discovery method. The method may be applied to an EAS, or may be applied to a chip in an EAS, or may be applied to a logical module or software that can implement all or some EAS functions. The following takes the EAS as an example. The method includes: An EAS sends a fourth message to an EES, where the fourth message includes EAS information, and the EAS information includes at least one of an application identifier corresponding to the EAS and an EAS bundle identifier corresponding to the EAS.

It can be learned from the method according to the seventh aspect that the EAS may upload the EAS information to the EES via the fourth information, so that the EES obtains the EAS information of the EAS associated with the EES, so as to subsequently perform at least one of an initial EES discovery procedure, an initial EAS discovery procedure, an EES discovery procedure in an application context relocation process, and an EAS discovery procedure in an application context relocation process.

According to an eighth aspect, an embodiment of this application provides still another edge application server discovery method. The method may be applied to an EES, or may be applied to a chip in an EES, or may be applied to a logical module or software that can implement all or some EES functions. The following uses the EES as an example. The method includes: An EES receives a fourth message from at least one EAS, where the fourth message includes EAS information, and the EAS information includes at least one of an application identifier corresponding to an EAS and an EAS bundle identifier corresponding to the EAS.

It can be learned from the method according to the eighth aspect that the EES may receive the EAS information of the EAS via the fourth information, so that the EES obtains the EAS information of the EAS associated with the EES, so as to subsequently perform at least one of an initial EES discovery procedure, an initial EAS discovery procedure, an EES discovery procedure in an application context relocation process, and an EAS discovery procedure in the application context relocation process.

According to a ninth aspect, an embodiment of this application provides still another edge application server discovery method. The method may be applied to an EES, or may be applied to a chip in an EES, or may be applied to a logical module or software that can implement all or some EES functions. The following uses the EES as an example. The method includes: An EES sends a fifth message to an ECS, where the fifth message includes EES information, the EES information includes EAS information of an EAS associated with the EES, and the EAS information includes at least one of an application identifier corresponding to the EAS and an EAS bundle identifier corresponding to the EAS.

It can be learned from the method in the ninth aspect that the EES may upload the EES information to the ECS via the fifth message, so that the ECS obtains the EAS information associated with the EES, so as to subsequently perform at least one of an initial EES discovery procedure, an initial EAS discovery procedure, an EES discovery procedure in an application context relocation process, and an EAS discovery procedure in an application context relocation process.

According to a tenth aspect, an embodiment of this application provides still another edge application server discovery method. The method may be applied to an ECS, or may be applied to a chip in an ECS, or may be applied to a logical module or software that can implement all or some ECS functions. The following uses the ECS as an example. The method includes: An ECS receives a fifth message from at least one EES, where the fifth message includes EES information, the EES information includes EAS information of an EAS associated with the EES, and the EAS information includes at least one of an application identifier corresponding to the EAS and an EAS bundle identifier corresponding to the EAS.

It can be learned from the method according to the tenth aspect that the ECS may receive the EES information of the EES via the fifth message, so that the ECS obtains EAS information associated with each EES, so as to subsequently perform at least one of an initial EES discovery procedure, an initial EAS discovery procedure, an EES discovery procedure in an application context relocation process, and an EAS discovery procedure in an application context relocation process.

According to an eleventh aspect, this application provides an edge application server discovery system. The system has a function for implementing some or all of the implementations of the first aspect, or a function for implementing some or all of the implementations of the second aspect, or a function for implementing some or all of the implementations of the third aspect, or a function for implementing some or all of the implementations of the fourth aspect, or a function of some or all of the implementations of the fifth aspect, or a function of some or all of the implementations of the sixth aspect, or a function of some or all of the implementations of the seventh aspect, or a function of some or all of the implementations of the eighth aspect, or a function of some or all of the implementations of the ninth aspect, or a function of some or all of the implementations of the tenth aspect.

According to a twelfth aspect, this application provides an edge application server discovery apparatus. The apparatus has a function for implementing some or all of the implementations of the first aspect, or a function for implementing some or all of the implementations of the second aspect, or a function for implementing some or all of the implementations of the third aspect, or a function for implementing some or all of the implementations of the fourth aspect, or a function of some or all of the implementations of the fifth aspect, a function of some or all of the implementations of the sixth aspect, or a function of some or all of the implementations of the seventh aspect, or a function of some or all of the implementations of the eighth aspect, or a function of some or all of the implementations of the ninth aspect, or a function of some or all of the implementations of the tenth aspect. The function may be implemented by hardware, or may be implemented by hardware executing corresponding software. The hardware or the software includes one or more units or modules corresponding to the functions.

In a possible design, a structure of the apparatus may include a processing unit and a communication unit. The processing unit is configured to support the edge application server discovery apparatus in performing a corresponding function in the foregoing method. The processing unit may be configured to control the communication unit to perform data/signaling receiving and sending. The communication unit is configured to support communication between the edge application server discovery apparatus and another edge application server discovery apparatus. The edge application server discovery apparatus may further include a storage unit. The storage unit is configured to be coupled to the processing unit and the communication unit, and store program instructions and data that are necessary for the edge application server discovery apparatus. In an implementation process, the processor may be configured to perform, for example, but not limited to, baseband-related processing; and the transceiver may be configured to perform, for example, but not limited to, radio frequency receiving and sending.

In an example, the communication unit may be a transceiver or a communication interface, the storage unit may be a memory, and the processing unit may be a processor. The processor may be configured to perform the methods in the first aspect to the tenth aspect by using a logic circuit or running a computer program, the transceiver may be configured to receive and send a signal, and the memory may be configured to store the computer program.

Optionally, the foregoing components may be separately disposed on chips independent of each other, or at least some or all of the components may be disposed on a same chip. For example, the processor may be divided into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. The chip may be referred to as a system-on-a-chip (system-on-a-chip, SoC). Whether the components are separately disposed on different chips or integrated and disposed on one or more chips usually depends on a requirement of a product design. This embodiment of this application imposes no limitation on specific implementations of the foregoing components.

According to a thirteenth aspect, this application further provides a processor, configured to perform the foregoing methods. In a process of performing these methods, a process of sending the foregoing signal and a process of receiving the foregoing signal in the foregoing method may be understood as a process of outputting the foregoing signal by the processor and a process of inputting the foregoing signal by the processor. When outputting the foregoing signal, the processor outputs the foregoing signal to the transceiver, so that the transceiver transmits the signal. After the foregoing signal is output by the processor, other processing may further need to be performed on the signal, and then the signal arrives at the transceiver. Similarly, when the processor receives the input signal, the transceiver receives the signal, and inputs the signal into the processor. Further, after the transceiver receives the signal, other processing may further need to be performed on the signal, and then the signal is input to the processor.

Unless otherwise specified, operations such as sending and receiving related to the processor may be more generally understood as operations such as output, receiving, and input of the processor if the operations do not conflict with actual functions or internal logic of the operations in related descriptions, instead of operations such as sending and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in this embodiment of this application.

According to a fourteenth aspect, this application provides a computer-readable storage medium, configured to store instructions. When the instructions are run by a computer, the method according to any one of the first aspect to the tenth aspect is performed.

According to a fifteenth aspect, this application further provides a computer program product including instructions. When the computer program product runs on a computer, the method according to any one of the first aspect to the tenth aspect is performed.

According to a sixteenth aspect, this application provides a chip system, where the chip system includes a processor and an interface, the interface is configured to obtain a program or instructions, and the processor is configured to invoke the program or the instructions to implement the function in the first aspect to the function in the tenth aspect. In a possible design, the chip system further includes a memory. The memory is configured to store program instructions and data that are necessary for a terminal. The chip system may include a chip, or may include a chip and another discrete component.

### BRIEF DESCRIPTION OF DRAWINGS

To describe technical solutions in embodiments of this application more clearly, the following describes the accompanying drawings used in embodiments of this application.
FIG. 1 is a diagram of an EAS bundle according to an embodiment of this application;
FIG. 2 is a diagram of an architecture of a communication system according to an embodiment of this application;
FIG. 3A and FIG. 3B are a schematic flowchart of an edge application server discovery method according to an embodiment of this application;
FIG. 4A and FIG. 4B are a schematic flowchart of another edge application server discovery method according to an embodiment of this application;
FIG. 5 is a schematic flowchart of still another edge application server discovery method according to an embodiment of this application;
FIG. 6 is a schematic flowchart of still another edge application server discovery method according to an embodiment of this application;
FIG. 7 is a schematic flowchart of still another edge application server discovery method according to an embodiment of this application;
FIG. 8 is a schematic flowchart of still another edge application server discovery method according to an embodiment of this application;
FIG. 9 is a schematic flowchart of still another edge application server discovery method according to an embodiment of this application;
FIG. 10 is a schematic flowchart of still another edge application server discovery method according to an embodiment of this application;
FIG. 11 is a diagram of a structure of an edge application server discovery apparatus according to an embodiment of this application;
FIG. 12 is a diagram of a structure of another edge application server discovery apparatus according to an embodiment of this application;
FIG. 13 is a diagram of a structure of still another edge application server discovery apparatus according to an embodiment of this application; and
FIG. 14 is a diagram of a structure of still another edge application server discovery apparatus according to an embodiment of this application.

### DESCRIPTION OF EMBODIMENTS

In this application, "a plurality of means two or more. In this application, the term "and/or" describes an association relationship between associated objects, and represents that three relationships may exist. For example A and/or B may represent the following cases: Only A exists, both A and B exist, and only B exists, where A and B may be singular or plural. The character "/" generally indicates an "or" relationship between the associated objects. "one or more" or a similar expression thereof means any combination of the items, including any combination of one item (piece) or a plurality of items (pieces). For example, at least one (piece) of a, b, or c may represent a, b, c, a and b, a and c, b and c, or a, b and c, and each of a, b, c may be an element, or may be a set including one or more elements.

In embodiments of this application, the terms "system" and "network", and "corresponding" and "associated" may be used interchangeably, and meanings of the terms may be understood by a person skilled in the art.

Currently, 3GPP SA6 is researching a multi-access edge computing (multi-access edge computing, MEC) technology. The MEC technology can provide a service and a cloud computing function that are required by a telecom user nearby through a radio access network, to create a carrier-class service environment with high performance, low latency, and high bandwidth. This effectively accelerates download of various content, services, and applications in a network, and ensures uninterrupted high-quality network experience.

In an application scenario, an application user may sign a service agreement with an application provider, so that an edge data network (Edge Data Network, EDN) deployed by the provider may provide a corresponding service. Specifically, the application user may log in to an application client on a terminal, and obtain a service through a connection between the application client and an edge application server (Edge Application Server, EAS).

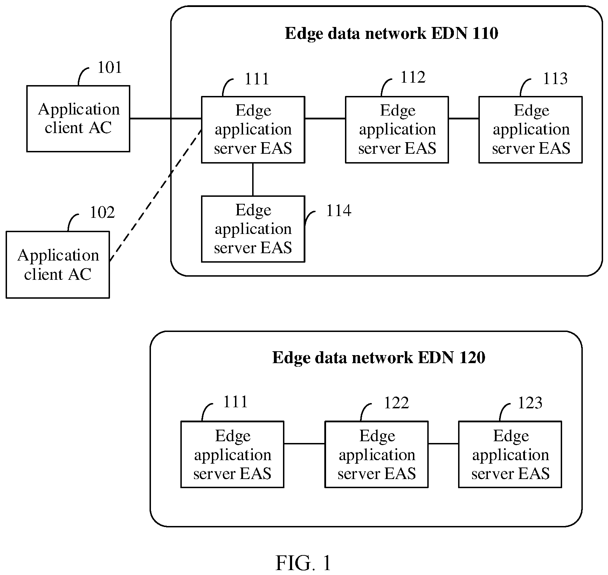

To better meet a user requirement, a plurality of EASs in the EDN may be integrated to provide a service for one AC. Specifically, when the AC is connected to an EAS (for example, a main EAS) in the EDN, the EAS may invoke data of other EASs in the EDN to provide a service for the AC. In FIG. 1, an example in which an EDN 110 includes an EAS 111, an EAS 112, an EAS 113, and an EAS 114, and an EDN 120 includes an EAS 111, an EAS 122, and an EAS 123 is used. When an AC 101 is connected to the EAS 111, the EAS 111 may invoke the EAS 112 and the EAS 113 to obtain corresponding data, integrate data of the EAS 111, the EAS 112, and the EAS 113, and return the data to the AC 101, so as to complete a corresponding service.

However, in an existing EAS discovery procedure, only information about one EAS is considered (for example, only information about a main EAS is considered), and a discovered EAS may not be able to invoke other EASs in an EDN to provide a service for a specific AC together. Therefore, an EAS discovery failure is caused, a service discovery delay and a service interruption delay are increased, and user experience of an application is affected. For example, when an EAS bundle required by the AC has an EAS located outside the EDN, the AC cannot obtain a corresponding service when connecting to an EAS in the EDN. It is assumed that EASs required by the AC 102 include the EAS 111, the EAS 122, and the EAS 123. With reference to FIG. 1, it can be learned that the EAS 122 and the EAS 123 are located outside the EDN 110. When the AC 102 is connected to the EAS 111 in the EDN 110, the EAS 111 cannot invoke the EAS 122 and the EAS 123 to provide a service for the AC 102. Therefore, how to ensure that an EAS discovered in an EAS discovery procedure can provide a service for a particular application is an urgent problem to be resolved.

In view of this, embodiments of this application provide an edge application server discovery method, to effectively ensure that an EAS discovered in an EAS discovery procedure can provide a service for a particular application in a terminal, so that an EAS discovery failure is avoided, a service discovery delay and a service interruption delay are reduced, and user experience of the application is improved.

The edge application server discovery method in embodiments of this application may be applied to various communication systems, including but not limited to a 5th generation (5th generation, 5G) mobile communication system, a new radio access technology (New Radio Access Technology, NR) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), and a worldwide interoperability for microwave access (Worldwide Interoperability for Microwave Access, WiMAX) communication system. The mobile communication system may include non-standalone (Non-Standalone, NSA) networking and/or standalone (Standalone, SA) networking. Alternatively, the technical solutions provided in this application may be applied to a future communication system, for example, a 6th generation mobile communication system. This is not limited in this application.

The edge application server discovery method provided in embodiments of this application may be further applied to machine type communication (Machine Type Communication, MTC), a long term evolution-machine (Long Term Evolution-machine, LTE-M) technology, a device-to-device (Device-to-Device, D2D) network, a machine-to-machine (Machine-to-Machine, M2M) network, an internet of things (Internet of Things, IoT) network, or another network. The IoT network may include, for example, an internet of vehicles. Communication manners in an internet of vehicles system are collectively referred to as vehicle-to-X (Vehicle-to-X, V2X, where X may represent anything). For example, the V2X may include vehicle-to-vehicle (Vehicle-to-Vehicle, V2V) communication, vehicle-to-infrastructure (Vehicle-to-Infrastructure, V2I) communication, vehicle-to-pedestrian (Vehicle-to-Pedestrian, V2P) communication, vehicle-to-network (Vehicle-to-Network, V2N) communication, or the like.

The edge application server discovery method in embodiments of this application may be further applied to various communication scenarios, including but not limited to a service continuity scenario, a mobile edge computing (Mobile Edge Computing, MEC) scenario, and the like.

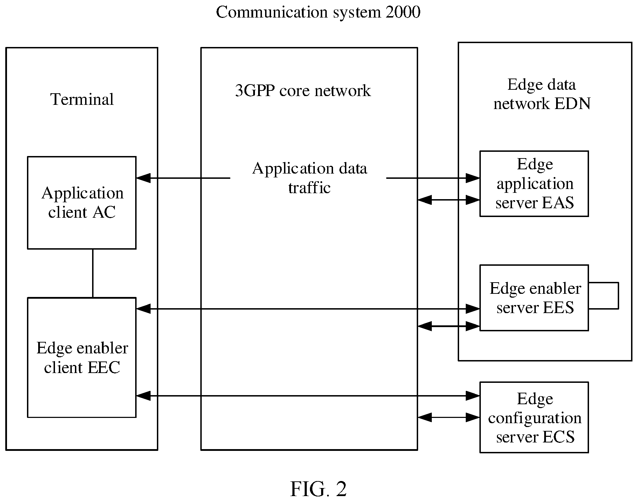

FIG. 2 is a diagram of an architecture of a communication system 2000 according to an embodiment of this application. As shown in FIG. 2, the communication system includes a terminal, a core network, an EDN, and an edge configuration server (Edge Configuration Server, ECS). One or more application clients (Application Clients) and one or more edge enabler clients (Edge Enabler Clients, EECs) may be deployed in the terminal. It should be noted that the communication system may further include another network device. This is not limited.

For ease of understanding, the following describes some network elements, terms, and the like in this application.

### 1. Data network

The data network (Data network, DN) is a service network of an operator or a third party, and may provide a service (for example, an operator service or an internet service) for a terminal.

### 2. Local data network

The local data network (Local DN) may be an access point (access point) of a data network that is very close to an attachment point (attachment point) of a user

### 3. Edge data network EDN

In one understanding, the EDN, corresponding to only one data network, is a special local data network, includes an edge enabler function, may use a data network access identifier (data network access identifier, DNAI) and a data network name (data network name, DNN) identifier, and is a network logical concept.

In another understanding, the EDN is an equivalent concept of a central cloud, may be understood as a local data center (in a geographical location concept), may be identified by using a DNAI, and may include one or more local data networks.

### 4. Edge application server EAS

An application deployed in an EDN may be referred to as the EAS. Specifically, the EAS may be an instance (instance) that is of a server application (for example, social media software, augmented reality (augmented reality, AR), or virtual reality (virtual reality, VR)) and that is deployed and is run in the EDN.

One or more EASs may be deployed in one or more EDNs for an application. EASs deployed and run in different EDNs can be considered as different EASs of one application, may share a domain name, and may use one IP address or different IP addresses.

Optionally, the EAS has a corresponding application and/or a corresponding EAS bundle. A correspondence between the EAS and the application may be described as a correspondence between an EAS identifier (for example, an EAS ID) and an application identifier (for example, an AC ID), or a correspondence between the EAS and an application identifier. This is not limited. A correspondence between the EAS and the EAS bundle may be described as a correspondence between an EAS identifier (for example, an EAS ID) and an EAS bundle identifier (for example, a composite ID), or a correspondence between the EAS and an EAS bundle identifier. This is not limited.

It should be noted that "the application corresponding to the EAS", "an application identifier corresponding to the EAS", "an application associated with the EAS", and "an application identifier associated with the EAS" may be used interchangeably.

It should be noted that "an EAS bundle corresponding to the EAS", "an EAS bundle identifier corresponding to the EAS", "an EAS bundle identifier associated with the EAS", and "an EAS bundle identifier associated with the EAS" may be used interchangeably.

Alternatively, the EAS may be replaced with an edge application, an edge application server, an application instance, an edge application instance, an MEC application, an MEC application server, an EAS function, or the like. This is not limited in this application. For ease of description, the EAS is referred to as the edge application server in the following.

### 5. Edge application server EAS bundle (composite EAS)

One or more EASs in an EDN may be combined to obtain an EAS bundle, and different EAS bundles may respectively correspond to different applications (that is, the different EAS bundles may provide services for the different applications). For example, the EDN includes a first EAS, a second EAS, a third EAS, a fourth EAS, and a fifth EAS. The first EAS, the second EAS, and the third EAS in the EDN may be combined to obtain a first EAS bundle, and the first EAS bundle corresponds to a first application. The first EAS, the fourth EAS, and the fifth EAS in the EDN may be combined to obtain a second EAS bundle, and the second EAS bundle corresponds to a second application.

Optionally, the EAS bundle has a corresponding EAS bundle identifier, the EAS bundle identifier is used to identify the EAS bundle (that is, a bundle of EASs), and the EAS bundle identifier may be represented as a composite ID or the like. This is not limited. Optionally, a correspondence between an EAS bundle and an application may be described as a correspondence between an EAS bundle identifier (for example, a composite ID) and an application identifier (for example, an AC ID), or a correspondence between an EAS bundle and an application identifier. This is not limited.

It should be noted that "an application corresponding to the EAS bundle", "an application identifier corresponding to the EAS bundle", "an application associated with the EAS bundle", and "an application identifier associated with the EAS bundle" may be used interchangeably.

### 6. Application client AC

The AC is a peer entity of an application server on a terminal side, and is used by an application user (user) to obtain an application service from the application server. The AC may be a client program of an application on the terminal side, and may be connected to an application server on a cloud to obtain an application service, or may be connected to an EAS deployed and run in one or more EDNs to obtain an application service. The AC may also be referred to as an application program client. This is not limited in this application.

Optionally, the AC has a corresponding application identifier, the application identifier is used to identify the application client, and the application identifier may be represented as an application ID, an AC ID, or the like. This is not limited. Optionally, the application has a corresponding EAS, and a correspondence between the application and the EAS may be described as a correspondence between an application identifier (for example, an AC ID) and an EAS identifier (for example, a composite ID), or a correspondence between the application and an EAS identifier. This is not limited.

It should be noted that "the EAS corresponding to the application" and " an EAS identifier corresponding to the application", "an EAS identifier associated with the application", and "an EAS identifier associated with the application" may be used interchangeably.

Optionally, the application has a corresponding EAS bundle. A correspondence between the application and the EAS bundle may be described as a correspondence between an application identifier (for example, an AC ID) and an EAS bundle identifier (for example, a composite ID), or a correspondence between the application and an EAS bundle identifier. This is not limited.

It should be noted that "the EAS bundle corresponding to the application", "tan EAS bundle identifier corresponding to the application", "an EAS bundle identifier associated with the application", and " an EAS bundle identifier associated with the application" may be used interchangeably.

### 7. Edge enabler server EES

The EES can provide some enabler capabilities for an EAS deployed in an EDN. The EES may support registration of an edge application server and authentication and authorization of a terminal, provide an IP address of the edge application server for the terminal, and the like. The EES may further support obtaining an identifier and the IP address of the edge application server, and further support sending the obtained identifier and the obtained IP address to an ECS. The EES is deployed in the EDN.

Generally, for an EAS registered with the EES, or when a management system configures EAS information on the EES or preconfigures EAS information on the EES, or when EAS information is stored on the EES, or for an EAS managed on the EES, the EAS is referred to as an EAS associated with the EES, the EES is referred to as an EES associated with the EAS, or the EES controls or manages the EAS that is registered with or configured in the EES.

Alternatively, the EAS associated with the EES may be replaced with an EAS corresponding to the EES, and the EES associated with the EAS may be replaced with an EES corresponding to the EAS. This is not limited in this application.

### 8. Edge enabler client EEC

The EEC is an enabler layer entity on a terminal side. The EEC may be configured to register information about the EEC and information about an AC with an EES, perform security authentication and authorization, obtain an IP address of an EAS from the EES, provide an edge computing enabler capability for the AC, and the like. For example, the EEC may return the IP address of the EAS to the AC through an EAS discovery service.

### 9. Edge configuration server ECS

The ECS is mainly responsible for maintenance of EDN information. For example, the ECS may provide EES information for a terminal. For another example, the ECS may further interact with a DNS of an application to obtain EAS information, and directly provide the EAS information for the terminal. The ECS may further obtain and store information about an EAS and an IP address from other functional entities.

Generally, for an EES registered with the ECS, or when a management system configures EES information on the ECS or preconfigures EES information on the ECS, or when EES information is stored on the ECS, or for an EES managed on the ECS, the EES is referred to as an EES associated with the ECS, the ECS is referred to as an ECS associated with the EES, or the ECS controls or manages the EES registered with or configured on the ECS. Optionally, the EES information may further include information about an EAS associated with the EES.

### 10. Terminal

The terminal may also be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an unmanned aerial vehicle, a helicopter, an airplane, a ship, a robot, a mechanical arm, a smart home device, or the like. A specific technology and a specific device form used by the terminal are not limited in embodiments of this application.

Optionally, the terminal may include an application client AC and/or an edge enabler client EEC. For example, when the terminal includes an AC, the terminal may be considered as an AC. For another example, when the terminal includes an EEC, the terminal may be considered as an EEC. For another example, when the terminal includes an AC and an EEC, the terminal may be considered as a combination device of the AC and the EEC. This is not limited.

### 11. Application context relocation (application context relocation, ACR)

The application context relocation may also be referred to as application context reposition, and is not distinguished in this application.

In a running process of an edge application, when a terminal moves out of a current service area, an EAS that currently provides a service may not continue to provide a service for the currently running application; or an EAS that currently provides a service is no longer an optimal EAS that can provide a service for the terminal, and another EAS may be more suitable to provide a service for the terminal. In this case, a new EAS may be selected to provide a service for the terminal. For ease of description, in embodiments of this application, the EAS that currently provides the service is referred to as a source EAS (source EAS, S-EAS), an EES associated with the S-EAS is referred to as an S-ESS, the new EAS is referred to as a target EAS (target EAS, T-EAS), and an EES associated with the T-EAS is referred to as a T-EES.

12. An application context relocation process can be mainly divided into the following four phases.

### Phase 1: Detection of application context relocation

In this phase, it may be determined that context transfer may be required. A target event may be detected by a detection entity. The target event may include a terminal location change, an update of a terminal user plane path, and the like.

### Phase 2: Decision on application context relocation

In this phase, a decision entity determines that context transfer is required.

### Phase 3: Execution of application context relocation

In this phase, an executing entity transfers application context from a source EAS to a target EAS. Further, discovery of the target EAS is included, related information of the target EAS may be notified to a terminal, and an EAS (which may be the source EAS and the target EAS) is notified to initiate application context transmission. An EES or the EAS executes an application function (application function, AF) traffic influence (AF traffic influence), and carries N6 routing information of the T-EAS.

### Phase 4: Cleanup after application context relocation

In this phase, a plurality of entities are involved. An EAS notifies an EEC of an application context transmission result through an EES. An AC initiates a new socket connection to a target EAS and the like.

For ease of understanding of embodiments disclosed in this application, the following three points are described.
(1) A scenario in embodiments disclosed in this application is described by using an example of an MEC scenario. It should be noted that a solution in embodiments disclosed in this application may be further applied to another scenario, and a corresponding name may be replaced with a name of a corresponding function in the another scenario.
(2) Aspects, embodiments, or features of this application are presented in embodiments disclosed in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.
(3) Embodiments disclosed in this application are not limited to listed message names, and may be replaced with other message names. It should be appreciated and understood that related information included in a message may alternatively be carried in another message. This is not limited in this application document.

Embodiments of this application provide an edge application server discovery method. In the method, an S-EES may receive a first message from a T-EES, where the first message may be used to determine at least one EAS, and the at least one EAS corresponds to a first application. An EAS corresponding to the first application may be discovered in an EAS discovery procedure, to effectively ensure that the discovered EAS can provide a service for the first application in a terminal.

Optionally, the first message further indicates a correspondence between the at least one EAS and the first application. It should be noted that, in this implementation, the T-EES can obtain an application identifier of the first application and/or a corresponding EAS bundle identifier, and may determine, from EASs associated with the T-EES based on the application identifier and/or the EAS bundle identifier, the EAS corresponding to the first application. Therefore, the T-EES may indicate the correspondence between the at least one EAS and the first application via the first message, so that the S-EES may directly determine, based on the first message, the EAS corresponding to the first application. In other words, the T-EES may determine the EAS corresponding to the first application.

Optionally, the first message includes at least one of an application identifier corresponding to an EAS and an EAS bundle identifier corresponding to the EAS. It should be noted that, in this implementation, the T-EES does not need to determine the EAS corresponding to the first application, and may directly send, to the S-EES, an application identifier and/or an EAS bundle identifier that correspond/corresponds to the EAS associated with the T-EES. When the S-EES receives the application identifier and/or the EAS bundle identifier, the S-EES may determine, from the EASs associated with the T-EES based on the application identifier and/or the EAS bundle identifier, the EAS corresponding to the first application. In other words, the S-EES may determine the EAS corresponding to the first application.

Optionally, the first message may include at least one of an EAS discovery response (EAS discovery response) message, an EAS discovery subscription response (EAS discovery subscription response) message, an EAS discovery subscription update response (EAS discovery subscription update response) message, or a service discovery response message. A specific bearer message is not limited. For ease of description, an example in which the first message is an EAS discovery response message is used for description in the following embodiments.

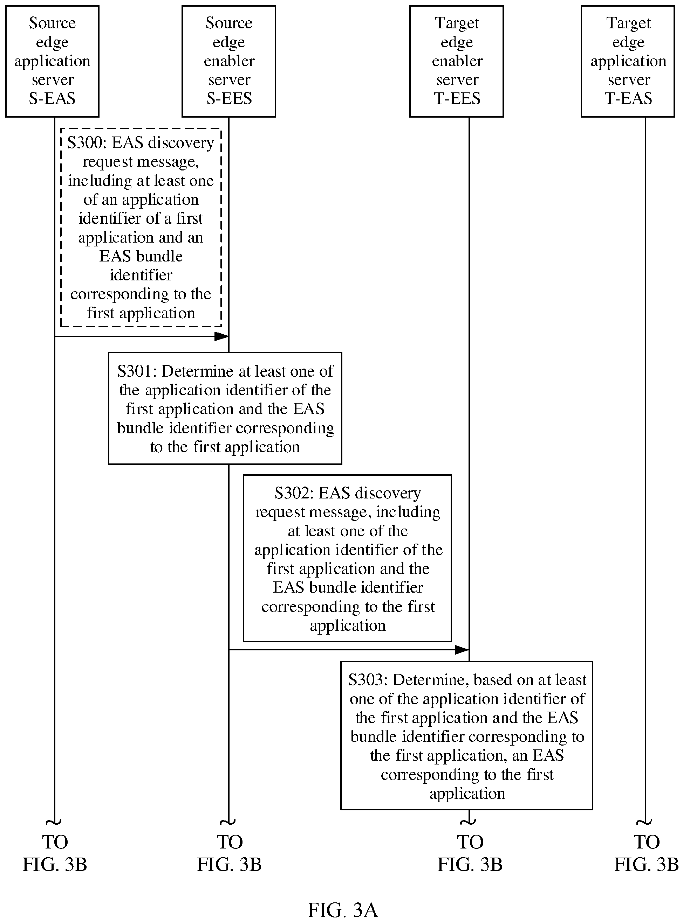

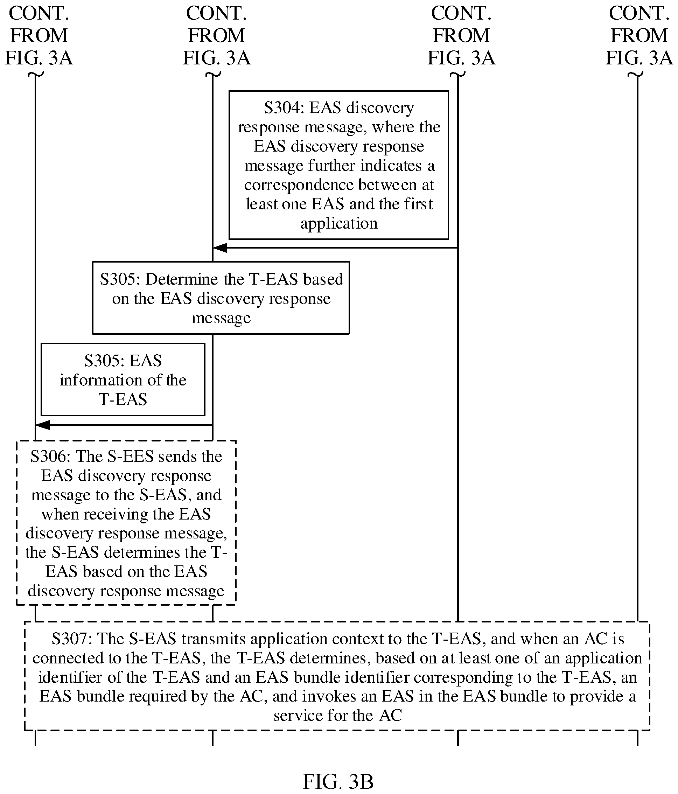

FIG. 3A and FIG. 3B are a schematic flowchart of an edge application server discovery method according to an embodiment of this application. With reference to FIG. 3A and FIG. 3B, the following describes in detail a related embodiment in which a T-EES determines an EAS corresponding to a first application. As shown in FIG. 3A and FIG. 3B, the method may include but is not limited to S301 to S307.

S301: An S-EES determines at least one of an application identifier of the first application and an EAS bundle identifier corresponding to the first application.

In an optional implementation, the S-EES determines the first application, and determines at least one of the application identifier of the first application and the EAS bundle identifier corresponding to the first application. It should be noted that, in this embodiment of this application, the application identifier of the first application is used as an example for description, or may be replaced with other application information (for example, an application type). This is not limited. In this embodiment of this application, the EAS bundle identifier corresponding to the first application is used as an example for description, or may be replaced with other bundle information (for example, an EAS bundle type) corresponding to the first application. This is not limited.

The first application is a particular application in a terminal (for example, an application that is in a terminal and that currently needs to perform application context relocation, or an application currently served by an S-EAS). For example, that the first application is an application that is in the terminal and that currently needs to perform application context relocation is used as an example. When the S-EES detects an ACR event and performs ACR, the S-EES determines the first application that is in the terminal and that currently needs to perform application context relocation.

Optionally, in some implementations, the S-EES may further obtain, from the S-EAS, at least one of the application identifier of the first application and the EAS bundle identifier corresponding to the first application. For example, the method may further include step S300: The S-EAS sends an EAS discovery request message to the S-EES, where the EAS discovery request message includes at least one of the application identifier of the first application and the EAS bundle identifier corresponding to the first application. When the S-EES receives the EAS discovery request message from the S-EAS, the S-EES may directly obtain, from the EAS discovery request message, at least one of the application identifier of the first application and the EAS bundle identifier corresponding to the first application. It should be noted that for related descriptions of determining, by the S-EAS, the application identifier of the first application and/or the EAS bundle identifier corresponding to the first application, reference may be made to step S301. Details are not described again. It should be noted that the application identifier of the first application and/or the EAS bundle identifier corresponding to the first application may alternatively be carried via another message (for example, an EAS subscription message). This is not limited.

It should be noted that a function implemented in step S300 is similar to a function implemented in step S301, and step S300 is an optional step.

S302: The S-EES sends an EAS discovery request message to the T-EES, and correspondingly, the T-EES receives the EAS discovery request message from the S-EES.

The EAS discovery request message is used to request to obtain at least one EAS from the T-EES.

Optionally, the EAS discovery request message includes at least one of the following information: the application identifier of the first application and the EAS bundle identifier corresponding to the first application.

Optionally, the EAS discovery request message may further include EAS information of an EAS associated with the S-EES, where the EAS information includes but is not limited to an EAS identifier, an EAS type, an EAS address, and an EAS filter parameter (including but not limited to at least one of a category, a service level, and an application feature).

S303: The T-EES determines, based on at least one of the application identifier of the first application and the EAS bundle identifier corresponding to the first application, an EAS corresponding to the first application.

In an optional implementation, the T-EES determines, based on the application identifier of the first application and an application identifier corresponding to an EAS in the T-EES, the EAS corresponding to the first application. Specifically, the method includes: The T-EES matches the application identifiers corresponding to the EASs associated with the T-EES with the application identifiers of the first application, respectively. If the application identifiers corresponding to the EASs are the same as or match the application identifiers of the first application, it is considered that the matching succeeds, and the T-EES may determine that the successfully matched EASs correspond to the first application, that is, the successfully matched EASs are EASs that can provide a service for the first application.

In another optional implementation, the T-EES determines, based on the EAS bundle identifier corresponding to the first application and an EAS bundle identifier corresponding to an EAS in the T-EES, an EAS corresponding to the first application. Specifically, the method includes: The T-EES matches the EAS bundle identifiers corresponding to the EASs associated with the T-EES with the EAS bundle identifiers corresponding to the first application, respectively. If the EAS bundle identifiers corresponding to the EASs are the same as or match the EAS bundle identifiers corresponding to the first application, it is considered that the matching succeeds, and the T-EES may determine that the successfully matched EASs correspond to the first application, that is, the successfully matched EASs are EASs that can provide a service for the first application.

It should be noted that, in still some implementations, the T-EES may further determine, based on both the application identifier of the first application and the EAS bundle identifier corresponding to the first application, the EAS corresponding to the first application. Details are not described again.

S304: The T-EES sends an EAS discovery response message to the S-EES, and correspondingly, the S-EES receives the EAS discovery response message from the T-EES.

Optionally, the EAS discovery response message may include EAS information of the at least one EAS. The EAS information may include but is not limited to at least one of an EAS identifier (an EAS ID), an application identifier corresponding to the EAS, and an EAS bundle identifier corresponding to the EAS. It should be noted that, in another implementation, the EAS information may further include EAS endpoint (EAS endpoint) information, for example, an IP address, a fully qualified domain name (Fully qualified domain name, FQDN), a uniform resource locator (Uniform Resource Locator, URL), and a uniform resource identifier (Uniform Resource Identifier, URI). It should be noted that the at least one EAS is an EAS associated with the T-EES.

Optionally, the EAS discovery response message further indicates a correspondence between the at least one EAS and the first application. Optionally, the EAS discovery response message may explicitly indicate the correspondence between the at least one EAS and the first application. For example, the EAS discovery response message includes an EAS identifier corresponding to the application identifier of the first application. Optionally, the EAS discovery response message may implicitly indicate the correspondence between the at least one EAS and the first application. For example, when the EAS discovery response message indicates that the EAS discovery succeeds, at least one EAS in the EAS discovery response message corresponds to the first application. When the EAS discovery response message indicates that the EAS discovery fails, at least one at least one EAS in the EAS discovery response message does not correspond to the first application.

Optionally, the EAS discovery response message may not indicate the correspondence between the at least one EAS and the first application. Instead, first indication information indicates the correspondence between the at least one EAS and the first application. Details are not described in a related embodiment. It should be noted that the first indication information may be carried in the EAS discovery response message, or may be carried in another message. This is not limited.

S305: The S-EES determines a T-EAS based on the EAS discovery response message, and sends EAS information of the determined T-EAS to the S-EAS.

It should be noted that there may be one or more EASs corresponding to the first application. When there is one EAS corresponding to the first application, and the S-EES receives the EAS discovery response message, the S-EES determines, based on the EAS discovery response message, the EAS corresponding to the first application, and may directly use the EAS as the T-EAS and send EAS information of the determined T-EAS to the S-EAS. When there are a plurality of EASs corresponding to the first application, and the S-EES receives the EAS discovery response message, the S-EES determines, based on the EAS discovery response message, the plurality of EASs corresponding to the first application, and may select, based on a specific rule or randomly, one EAS from the plurality of EASs as the T-EAS and send EAS information of the determined T-EAS to the S-EAS.

It should be noted that, in some embodiments, step S305 may not be performed in the method. In other words, step S305 is optional. This is not limited.

S306: The S-EES sends the EAS discovery response message to the S-EAS, and when receiving the EAS discovery response message, the S-EAS determines the T-EAS based on the EAS discovery response message.

It should be noted that for related descriptions of the EAS discovery response message, reference may be made to step S304. Details are not described again.

It should be noted that for related descriptions of determining the T-EAS by the S-EAS based on the EAS discovery response message, reference may be made to step S305. Details are not described again.

It should be noted that step S305 and step S306 are parallel steps. In the method, only step S305 may be performed and step S306 may not be performed, or only step S306 may be performed and step S305 may not be performed, or step S305 and step S306 may be simultaneously performed. In other words, a function implemented in step S306 is similar to a function implemented in step S305, and step S306 is an optional step. For example, if step S300 is performed in the method, step S306 may be performed in the method.

S307: The S-EAS transmits application context to the T-EAS, and when an AC is connected to the T-EAS, the T-EAS determines, based on at least one of an application identifier of the T-EAS and an EAS bundle identifier corresponding to the T-EAS, an EAS bundle required by the AC, and invokes an EAS in the EAS bundle to provide a service for the AC.

It should be noted that, in some implementations, step S307 may not be performed in the method. This is not limited.

It should be noted that the method in FIG. 3A and FIG. 3B is described by using an example in which the first message is the EAS discovery response message. When the first message is not the EAS discovery response message, the method in FIG. 3A may not include step S302. This is not limited.

It should be noted that, when the method in FIG. 3A does not include step S302, the T-EES may obtain, in another manner, the application identifier of the first application and/or the EAS bundle identifier corresponding to the first application. For example, the T-EES obtains, via the EAS subscription message, the application identifier of the first application and/or the EAS bundle identifier corresponding to the first application. This is not limited.

It can be learned that, in this implementation, the T-EES may determine, based on at least one of the application identifier of the first application and the EAS bundle identifier corresponding to the first application, the EAS corresponding to the first application, and may discover, in an EAS discovery procedure in an application context relocation process, the EAS corresponding to the first application, to effectively ensure that the EAS discovered in the EAS discovery procedure in the application context relocation process can provide the service for the first application in the terminal, so that an EAS discovery failure is avoided, repeated execution of the EAS discovery procedure is avoided, a service interruption delay is reduced, and user experience of the application is improved.

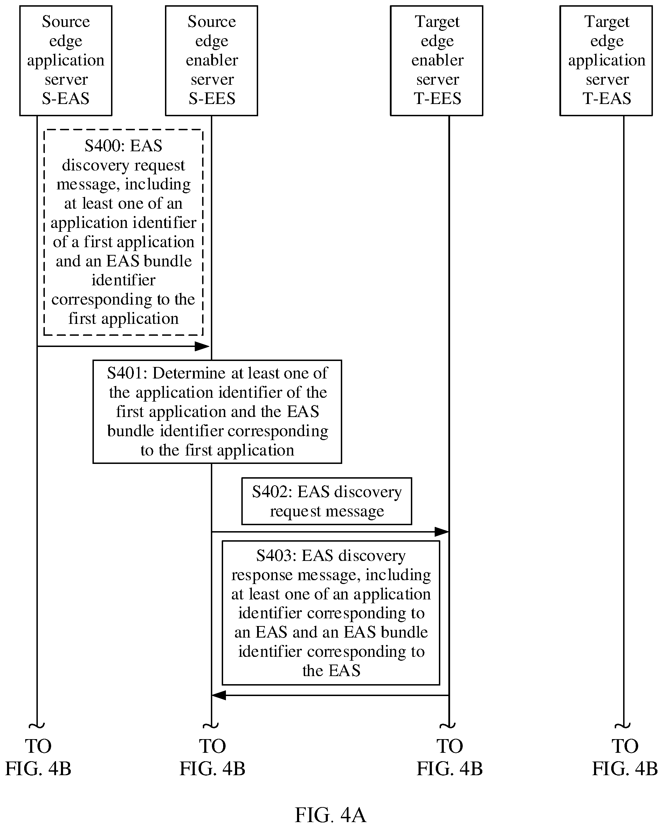

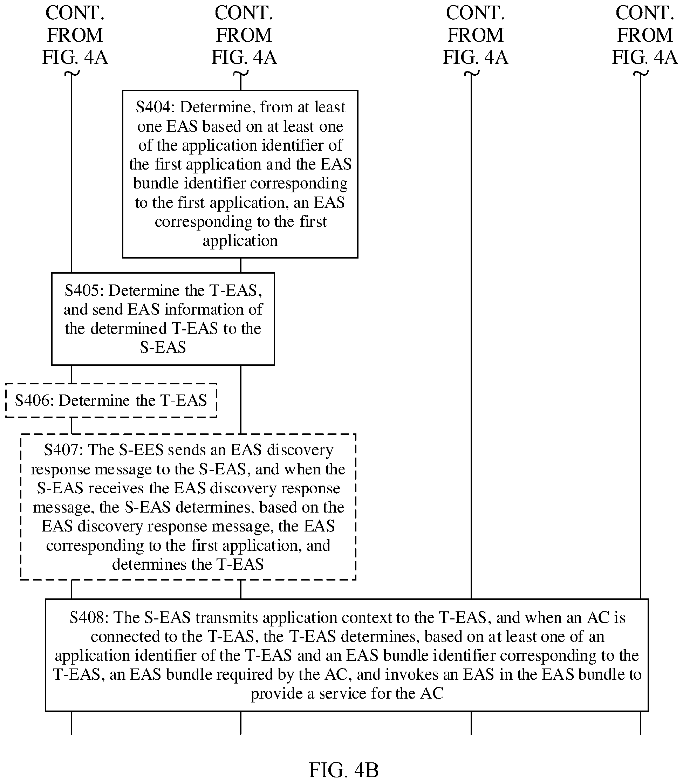

FIG. 4A and FIG. 4B are a schematic flowchart of another edge application server discovery method according to an embodiment of this application. With reference to FIG. 4A and FIG. 4B, the following describes in detail a related embodiment in which the S-EES determines the EAS corresponding to the first application. As shown in FIG. 4A and FIG. 4B, the method may include but is not limited to S401 to S408.

S401: An S-EES determines at least one of an application identifier of a first application and an EAS bundle identifier corresponding to the first application.

Optionally, in some implementations, the S-EES may further obtain, from the S-EAS, at least one of the application identifier of the first application and the EAS bundle identifier corresponding to the first application. For example, the method may further include step S400: The S-EAS sends an EAS discovery request message to the S-EES, where the EAS discovery request message includes at least one of the application identifier of the first application and the EAS bundle identifier corresponding to the first application. When the S-EES receives the EAS discovery request message from the S-EAS, the S-EES may directly obtain, from the EAS discovery request message, at least one of the application identifier of the first application and the EAS bundle identifier corresponding to the first application. For related descriptions, refer to step S300 and/or step S301. Details are not described again. It should be noted that a function implemented in step S400 is similar to a function implemented in step S401, and step S400 is an optional step.

S402: The S-EES sends an EAS discovery request message to a T-EES, and correspondingly, the T-EES receives the EAS discovery request message from the S-EES.

The EAS discovery request message is used to request to obtain at least one EAS from the T-EES.

Optionally, the EAS discovery request message includes EAS information of an EAS associated with the S-EES. For related descriptions of the EAS information, refer to step S302. Details are not described again.

S403: The T-EES sends an EAS discovery response message to the S-EES, and correspondingly, the S-EES receives the EAS discovery response message from the T-EES.

Optionally, the EAS discovery response message includes EAS information of at least one EAS. For related descriptions of the EAS information, refer to step S304. Details are not described again. It should be noted that the at least one EAS is an EAS associated with the T-EES.

Optionally, the EAS discovery response message includes at least one of an application identifier corresponding to an EAS and an EAS bundle identifier corresponding to the EAS. It should be noted that, in some implementations, at least one of the application identifier corresponding to the EAS and the EAS bundle identifier corresponding to the EAS may also be carried in EAS information. This is not limited. It should be noted that the EAS refers to an EAS associated with the T-EES.

S404: The S-EES determines, from the at least one EAS based on at least one of the application identifier of the first application and the EAS bundle identifier corresponding to the first application, an EAS corresponding to the first application.

The at least one EAS is an EAS associated with the T-EES.

It should be noted that for related descriptions of step S404, reference may be made to step S303. Details are not described again.

S405: The S-EES determines a T-EAS, and sends EAS information of the determined T-EAS to the S-EAS.

It should be noted that there may be one or more EASs corresponding to the first application. When the S-EES determines, by using step S404, that there is one EAS corresponding to the first application, the S-EES may directly use the EAS as the T-EAS, and send EAS information of the determined T-EAS to the S-EAS. When the S-EES determines, by using step S404, that there are a plurality of EASs corresponding to the first application, the S-EES may select, based on a specific rule or randomly, one EAS from the plurality of EASs as the T-EAS, and send the EAS information of the determined T-EAS to the S-EAS.

S406: The S-EAS determines the T-EAS.

It should be noted that there may be one or more EASs corresponding to the first application. When the S-EES determines, by using step S404, that there is one EAS corresponding to the first application, the S-EES may send EAS information of the EAS to the S-EAS, and the S-EAS may directly use the EAS as the T-EAS. When the S-EES determines, by using step S404, that there are the plurality of EASs corresponding to the first application, the S-EES may send EAS information of the plurality of EASs to the S-EAS. When receiving the EAS information of the plurality of EASs, the S-EAS may select, based on a specific rule or randomly, one EAS from the plurality of EASs as the T-EAS.

It should be noted that, when the S-EAS receives the EAS information of the T-EAS, the S-EAS may determine the T-EAS based on the received EAS information of the T-EAS.

It should be noted that, in some optional implementations, step S406 is an optional step. For example, if step S400 is performed in the method, step S406 is performed in the method. If step S400 is not performed in the method, step S406 is not performed.

S407: The S-EES sends the EAS discovery response message to the S-EAS, and when the S-EAS receives the EAS discovery response message, the S-EAS determines, based on the EAS discovery response message, the EAS corresponding to the first application, and determines the T-EAS.

It should be noted that for related descriptions of the EAS discovery response message, reference may be made to step S403. Details are not described again.

It should be noted that for related descriptions of determining the T-EAS by the S-EAS based on the EAS discovery response message, reference may be made to step S404. Details are not described again. It should be noted that a function implemented in step S407 is similar to a function implemented in step S404 to step S406, and step S407 is an optional step. For example, if the S-EES cannot determine the application identifier corresponding to the first application and the EAS bundle identifier corresponding to the first application, step S404 cannot be performed. In this case, in the method, step S407 may be performed to determine the EAS corresponding to the first application.

It should be noted that when step S407 is performed in the method, step S400 and/or step S401 may not be performed. To be specific, when step S400 and/or step S401 are/is not performed, the S-EES may directly send, to the S-EAS, at least one that is sent by the T-EES and that is of the application identifier corresponding to the EAS and the EAS bundle identifier corresponding to the EAS, and the S-EAS determines the T-EAS.

S408: The S-EAS transmits application context to the T-EAS, and when an AC is connected to the T-EAS, the T-EAS determines, based on at least one of an application identifier of the T-EAS and an EAS bundle identifier corresponding to the T-EAS, an EAS bundle required by the AC, and invokes an EAS in the EAS bundle to provide a service for the AC.

It should be noted that, in some implementations, step S408 may not be performed in the method. This is not limited.

It should be noted that the method in FIG. 4A and FIG. 4B is described by using an example in which the first message is an EAS discovery response message. When the first message is not the EAS discovery response message, the method in FIG. 4A may not include step S402. This is not limited.

It can be learned that, in this implementation, the S-EES may determine, based on at least one of the application identifier of the first application and the EAS bundle identifier corresponding to the first application, the EAS corresponding to the first application, and may discover, in an EAS discovery procedure in an application context relocation process, the EAS corresponding to the first application, to effectively ensure that the EAS discovered in the EAS discovery procedure in the application context relocation process can provide the service for the first application in the terminal, so that an EAS discovery failure is avoided, repeated execution of the EAS discovery procedure may be avoided, a service interruption delay is reduced, and user experience of the application is improved.

It should be noted that the method in FIG. 3A and FIG. 3B and the method in FIG. 4A and FIG. 4B are parallel solutions. Only the method in FIG. 3A and FIG. 3B may be performed, or only the method in FIG. 4A and

FIG. 4B may be performed, or both the method in FIG. 3A and FIG. 3B and the method in FIG. 4A and FIG. 4B may be performed. This is not limited in this application.

Embodiments of this application further provide another edge application server discovery method. In the method, an S-EES may receive a second message from an ECS, where the second message may be used to determine at least one EES, and an EAS associated with the at least one EES corresponds to a first application, to effectively ensure that the EAS associated with the EES discovered in an EES discovery procedure can provide a service for the first application in a terminal.

Optionally, the second message further indicates a correspondence between the first application and the EAS associated with the at least one EES. It should be noted that, in this implementation, the ECS can obtain an application identifier of the first application and/or a corresponding EAS bundle identifier, and may determine, based on the application identifier and/or the EAS bundle identifier, an EES associated with the EAS corresponding to the first application. Therefore, the ECS may indicate, via the second message, the correspondence between the EAS associated with the at least one EES and the first application, so that the S-EES may directly determine, based on the second message, the EES associated with the EAS corresponding to the first application. In other words, the ECS may determine the EES associated with the EAS corresponding to the first application.

Optionally, the second message includes at least one of the application identifier corresponding to the EAS associated with the at least one EES and the EAS bundle identifier corresponding to the EAS associated with the at least one EES. It should be noted that, in this implementation, the ECS does not need to determine the EAS corresponding to the first application, and may directly send, to the S-EES, the application identifier and/or the EAS bundle identifier corresponding to the EAS associated with the EES on the ECS. When the S-EES receives the application identifier and/or the EAS bundle identifier, the S-EES may determine, from the EES on the ECS based on the application identifier and/or the EAS bundle identifier, the EES associated with the EAS corresponding to the first application. In other words, the S-EES may determine the EES associated with the EAS corresponding to the first application.

Optionally, the second message may include at least one of an EES discovery response message, an EES discovery subscription response (EES discovery subscription response) message, an EES discovery subscription update response (EAS discovery subscription update response) message, or a service discovery response message. A specific bearer message is not limited. For ease of description, an example in which the second message is an EES discovery response message is used for description in the following embodiments.

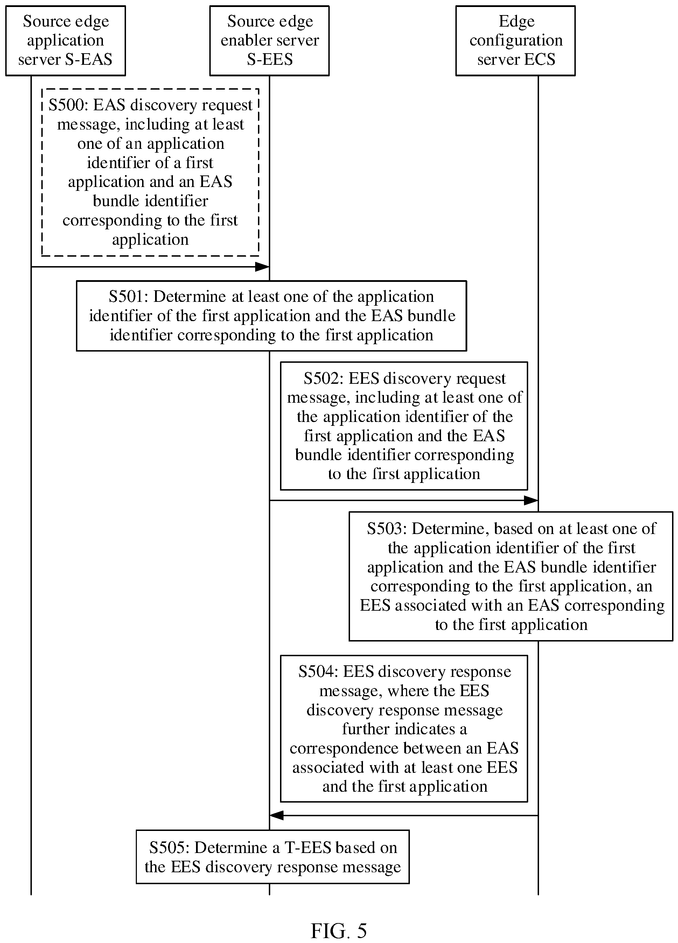

FIG. 5 is a schematic flowchart of still another edge application server discovery method according to an embodiment of this application. With reference to FIG. 5, the following describes in detail a related embodiment in which the ECS determines the EES associated with the EAS corresponding to the first application. As shown in FIG. 5, the method may include but is not limited to S501 to S505.

S501: An S-EES determines at least one of an application identifier of a first application and an EAS bundle identifier corresponding to the first application.

Optionally, in some implementations, the S-EES may further obtain, from the S-EAS, at least one of the application identifier of the first application and the EAS bundle identifier corresponding to the first application. For example, the method may further include step S500: The S-EAS sends an EAS discovery request message to the S-EES, where the EAS discovery request message includes at least one of the application identifier of the first application and the EAS bundle identifier corresponding to the first application. When the S-EES receives the EAS discovery request message from the S-EAS, the S-EES may directly obtain, from the EAS discovery request message, at least one of the application identifier of the first application and the EAS bundle identifier corresponding to the first application. For related descriptions, refer to step S300 and/or step S301. Details are not described again. It should be noted that a function implemented in step S500 is similar to a function implemented in step S501, and step S500 is an optional step.

S502: The S-EES sends an EES discovery request message to an ECS, and correspondingly, the ECS receives the EES discovery request message from the S-EES.

The EES discovery request message is used to request to obtain at least one EES from the ECS.

Optionally, the EES discovery request message includes at least one of the following information: the application identifier of the first application and the EAS bundle identifier corresponding to the first application.

Optionally, the EES discovery request message may further include EAS information of an EAS associated with the S-EES. For related descriptions of the EAS information, refer to step S302. Details are not described again.

Optionally, the EES discovery request message may further include a terminal identifier of a terminal associated with the S-EES.

S503: The ECS determines, based on at least one of the application identifier of the first application and the EAS bundle identifier corresponding to the first application, an EES associated with an EAS corresponding to the first application. In an optional implementation, the ECS determines, based on the application identifier of the first application and the application identifier corresponding to the EAS associated with the EES, an EES associated with an EAS corresponding to the first application. Specifically, the method includes: The ECS matches the application identifiers corresponding to the EASs associated with the EES on the ECS with the application identifiers of the first application, respectively. If the application identifiers corresponding to the EASs are the same as or match the application identifiers of the first application, it is considered that the matching succeeds, and the ECS may determine that the successfully matched EASs correspond to the first application, and determine the EES associated with the EASs corresponding to the first application, that is, the EES corresponding to the first application. In other words, the EAS associated with the EES is an EAS that can provide a service for the first application.

In another optional implementation, the ECS determines, based on the EAS bundle identifier corresponding to the first application and the EAS bundle identifier corresponding to the EAS associated with the EES, the EES associated with the EAS corresponding to the first application. Specifically, the method includes: The ECS matches the EAS bundle identifiers corresponding to the EASs associated with the EES on the ECS with the EAS bundle identifiers corresponding to the first application, respectively. If the EAS bundle identifiers corresponding to the EASs are the same as or match the EAS bundle identifiers corresponding to the first application, it is considered that the matching succeeds, and the ECS may determine that the successfully matched EASs correspond to the first application, and determine the EES associated with the EASs corresponding to the first application, that is, the EES corresponding to the first application. In other words, the EAS associated with the EES is an EAS that can provide a service for the first application.

It should be noted that, in some implementations, the ECS may further determine, based on both the application identifier of the first application and the corresponding EAS bundle identifier, the EAS corresponding to the first application. Details are not described again.

It should be noted that the "EES associated with the EAS corresponding to the first application" described in this embodiment of this application may also be referred to as the "EES corresponding to the first application". This is not limited.

S504: The ECS sends an EES discovery response message to the S-EES, and correspondingly, the S-EES receives the EES discovery response message from the ECS.

Optionally, the EES discovery response message may include EES information of the at least one EES. The EES information includes but is not limited to an EES identifier (an EES ID), EAS information of the EAS associated with the EES, and the like. The EAS information includes but is not limited to at least one of an EAS identifier (an EAS ID), an application identifier corresponding to the EAS, and an EAS bundle identifier corresponding to the EAS. It should be noted that for other descriptions of the EAS information, reference may be made to step S304. Details are not described again. Optionally, the application identifier and/or the EAS bundle identifier corresponding to the EAS may alternatively be directly carried in the EES discovery response message or the EES information. This is not limited.

Optionally, the EES discovery response message further indicates a correspondence between the first application and an EAS associated with the at least one EES. Optionally, the EES discovery response message may explicitly indicate a correspondence between the first application and an EAS associated with the at least one EES. For example, the EES discovery response message includes an EAS identifier corresponding to the application identifier of the first application, and an EES identifier corresponding to the EAS identifier. Optionally, the EES discovery response message may implicitly indicate a correspondence between the first application and an EAS associated with the at least one EES. For example, when the EES discovery response message indicates that the EES discovery succeeds, the at least one EES in the EES discovery response message is an EES associated with the EAS corresponding to the first application. When the EES discovery response message indicates that the EES discovery fails, none of the at least one EAS in the EES discovery response message is an EES associated with the EAS corresponding to the first application.

Optionally, the EES discovery response message may not indicate the correspondence between the first application and the EAS associated with the at least one EES. Instead, second indication information indicates the correspondence between the first application and the EAS associated with the at least one EES. Details are not described in a related embodiment. It should be noted that the second indication information may be carried in the EES discovery response message, or may be carried in another message. This is not limited.

It should be noted that the at least one EES is the EES on the ECS.

S505: The S-EES determines a T-EES based on the EES discovery response message.

It should be noted that there may be one or more EESs associated with the EAS corresponding to the first application. When there is one EES, and the S-EES receives the EES discovery response message, the S-EES determines, based on the EES discovery response message, the EES associated with the EAS corresponding to the first application, and may directly use the EES as the T-EES. When there are a plurality of EESs, and the S-EES receives the EES discovery response message, the S-EES determines, based on the EES discovery response message, the plurality of EESs associated with the EAS corresponding to the first application, and may select, from the plurality of EESs based on a specific rule or randomly, one EES as the T-EES.

It should be noted that the method in FIG. 5 is described by using an example in which the second message is an EES discovery response message. When the second message is not the EES discovery response message, the method in FIG. 5 may not include step S502. This is not limited.

It should be noted that, when the method in FIG. 5 does not include step S502, the ECS may obtain, in another manner, the application identifier of the first application or the EAS bundle identifier corresponding to the first application. For example, the ECS obtains, via an EAS subscription message, the application identifier of the first application or the EAS bundle identifier corresponding to the first application. This is not limited.

It can be learned that, in this implementation, the ECS may determine, based on at least one of the application identifier of the first application and the EAS bundle identifier corresponding to the first application, the EES associated with the EAS corresponding to the first application, and may discover the EES associated with the EAS corresponding to the first application in the EES discovery procedure in the application context relocation process, to effectively ensure that the EAS on the EES discovered in the EES discovery procedure in the application context relocation process can provide a service for the first application in the terminal, so that an EES discovery failure is avoided, repeated execution of the EES discovery procedure is avoided, a service interruption delay is reduced, and user experience of the application is improved. In addition, it can also be effectively ensured that the EAS discovered in the EAS discovery procedure in the application context relocation process can provide a service for the first application in the terminal, so that an EAS discovery failure is avoided, repeated execution of the EAS discovery procedure is avoided, a service interruption delay is reduced, and use experience of the application is improved.

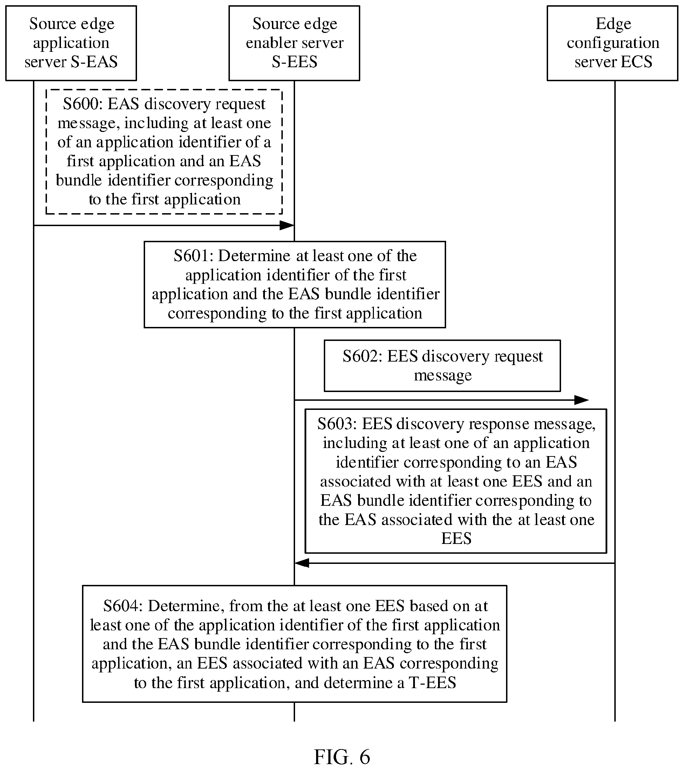

FIG. 6 is a schematic flowchart of still another edge application server discovery method according to an embodiment of this application. With reference to FIG. 6, the following describes in detail a related embodiment in which the S-EES determines the EES associated with the EAS corresponding to the first application. As shown in FIG. 6, the method may include but is not limited to S601 to S604.

S601: An S-EES determines at least one of an application identifier of a first application and an EAS bundle identifier corresponding to the first application.

Optionally, in some implementations, the S-EES may further obtain, from the S-EAS, at least one of the application identifier of the first application and the EAS bundle identifier corresponding to the first application. For example, the method may further include step S600: The S-EAS sends an EAS discovery request message to the S-EES, where the EAS discovery request message includes at least one of the application identifier of the first application and the EAS bundle identifier corresponding to the first application. When the S-EES receives the EAS discovery request message from the S-EAS, the S-EES may directly obtain, from the EAS discovery request message, at least one of the application identifier of the first application and the EAS bundle identifier corresponding to the first application. For related descriptions, refer to step S300 and/or step S301. Details are not described again. It should be noted that a function implemented in step S600 is similar to a function implemented in step S601, and step S600 is an optional step. S602: The S-EES sends an EES discovery request message to an ECS, and correspondingly, the ECS receives the EES discovery request message from the S-EES.

The EES discovery request message is used to request to obtain at least one EES from the ECS.

Optionally, the EES discovery request message may further include EAS information of an EAS associated with the S-EES. For related descriptions of the EAS information, refer to step S302. Details are not described again.

Optionally, the EES discovery request message may further include a terminal identifier of a terminal associated with the S-EES.

S603: The ECS sends an EES discovery response message to the S-EES, and correspondingly, the S-EES receives the EAS discovery response message from the ECS.

Optionally, the EES discovery response message includes at least one of an application identifier corresponding to an EAS associated with the at least one EES and an EAS bundle identifier corresponding to the EAS associated with the at least one EES. It should be noted that, in another implementation, the application identifier and/or the EAS bundle identifier corresponding to the EAS associated with the at least one EES may be further carried in EES information or EAS information. This is not limited. It should be noted that the at least one EES is the EES on the ECS.

S604: The S-EES determines, from the at least one EES based on at least one of the application identifier of the first application and the EAS bundle identifier corresponding to the first application, an EES associated with the EAS corresponding to the first application, and determines a T-EES.

In an optional implementation, the S-EES determines, based on the application identifier of the first application and the application identifier corresponding to the EAS associated with the at least one EES, the EES associated with the EAS corresponding to the first application. In another optional implementation, the S-EES determines, based on the EAS bundle identifier corresponding to the first application and the EAS bundle identifier corresponding to the EAS associated with the at least one EES, the EES associated with the EAS corresponding to the first application. For related descriptions, refer to step S503. Details are not described again.

It should be noted that the "EES associated with the EAS corresponding to the first application" described in this embodiment of this application may also be referred to as the "EES corresponding to the first application". This is not limited.

The at least one EES is the EES on the ECS.

It should be noted that there may be one or more EESs associated with the EAS corresponding to the first application. When the S-EES determines that there is one EES associated with the EAS corresponding to the first application, the S-EES may directly use the EES as the T-EES. When the S-EES determines that there are a plurality of EESs associated with the EASs corresponding to the first application, the S-EES may select, from the plurality of EESs based on a specific rule or randomly, one EES as the T-EES.

It should be noted that the method in FIG. 6 is described by using an example in which the second message is an EES discovery response message. When the second message is not the EES discovery response message, the method in FIG. 6 may not include step S601. This is not limited.

It can be learned that, in this implementation, the S-EES may determine, from the at least one EES based on at least one of the application identifier of the first application and the EAS bundle identifier corresponding to the first application, the EES associated with the EAS corresponding to the first application, and may discover the EES associated with the EAS corresponding to the first application in the EES discovery procedure in the application context relocation process, to effectively ensure that the EAS on the EES discovered in the EES discovery procedure in the application context relocation process can provide a service for the first application in the terminal, so that an EES discovery failure is avoided, repeated execution of the EES discovery procedure is avoided, a service interruption delay is reduced, and use experience of the application is improved. In addition, it can also be effectively ensured that the EAS discovered in the EAS discovery procedure in the application context relocation process can provide a service for the first application in the terminal, so that an EAS discovery failure is avoided, repeated execution of the EAS discovery procedure is avoided, a service interruption delay is reduced, and use experience of the application is improved.

It should be noted that the method in FIG. 5 and the method in FIG. 6 are parallel solutions. Only the method in FIG. 5 may be performed, or only the method in FIG. 6 may be performed, or both the method in FIG. 5 and the method in FIG. 6 may be performed. This is not limited in this application.

It should be noted that the method in FIG. 5 and the method in FIG. 6 may be further used in combination with the method in FIG. 3A and FIG. 3B and the method in FIG. 6 respectively. For example, the method in FIG. 5 may be used in combination with the method in FIG. 3A and FIG. 3B. The EES discovery procedure in the application context relocation process in FIG. 5 is first performed, and then the EAS discovery procedure in the application context relocation process in FIG. 3A and FIG. 3B is performed. For another example, the method in FIG. 6 may be used in combination with the method in FIG. 4A and FIG. 4B. The EES discovery procedure in the application context relocation process in FIG. 6 is first performed, and then the EAS discovery procedure in the application context relocation process in FIG. 4A and FIG. 4B is performed. For another example, the method in FIG. 6 may be used in combination with the method in FIG. 3A and FIG. 3B. The EES discovery procedure in the application context relocation process in FIG. 6 is first performed, and then the EAS discovery procedure in the application context relocation process in FIG. 3A and FIG. 3B is performed.

Embodiments of this application further provide still another edge application server discovery method. The method may be applied to an initial EES discovery procedure. In the method, an EEC may receive a third message from an ECS, where the third message may be used to determine at least one EES, to effectively ensure that an EAS associated with an EES discovered in an initial EES discovery procedure can provide a service for a second application in a terminal.

Optionally, the third message further indicates a correspondence between the second application and an EAS associated with the at least one EES. It should be noted that, in this implementation, the ECS can obtain an application identifier of the second application and/or a corresponding EAS bundle identifier, and may determine, based on the application identifier and/or the EAS bundle identifier, an EES associated with the EAS corresponding to the second application. Therefore, the ECS may indicate, via the third message, the correspondence between the second application and the EAS associated with the at least one EES, so that the EEC may directly determine, based on the third message, the EES associated with the EAS corresponding to the second application. In other words, the ECS may determine the EES associated with the EAS corresponding to the second application.

Optionally, the third message includes at least one of an application identifier corresponding to the EAS associated with at least one EES and an EAS bundle identifier corresponding to the EAS associated with the at least one EES. It should be noted that, in this implementation, the ECS does not need to determine the EAS corresponding to the second application, and may directly send, to the EEC, the application identifier and/or the EAS bundle identifier corresponding to the EAS associated with the EES on the ECS. When the EEC receives the application identifier and/or the EAS bundle identifier, the EEC may determine, from the EES on the ECS based on the application identifier and/or the EAS bundle identifier, the EES associated with the EAS corresponding to the second application. In other words, the EEC may determine the EES associated with the EAS corresponding to the second application.

Optionally, the third message may include at least one of an edge computing platform discovery response message, an edge computing platform discovery subscription response message, an edge computing platform discovery subscription update response message, and a service discovery response message. For ease of description, an example in which the third message is an edge computing platform discovery response message is used for description in the following embodiments.

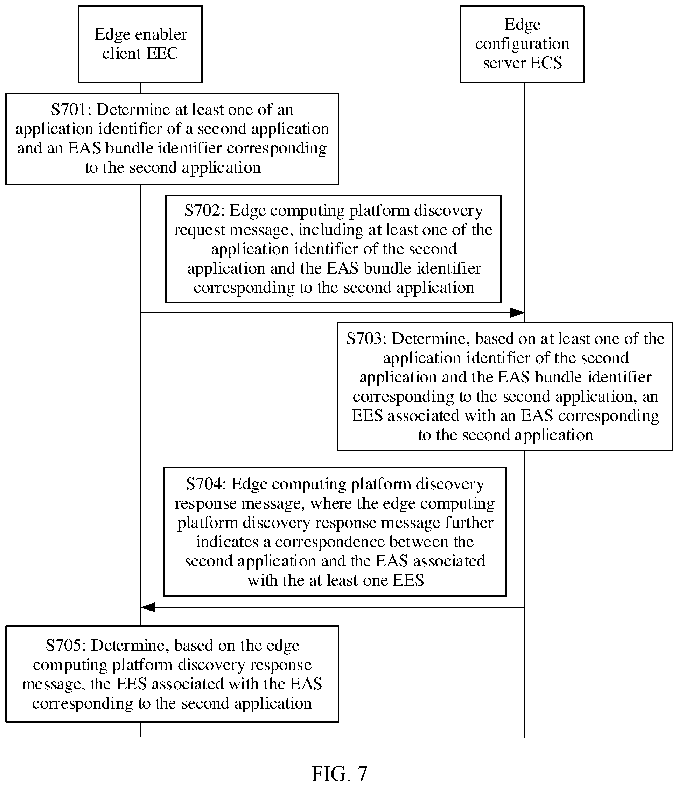

FIG. 7 is a schematic flowchart of still another edge application server discovery method according to an embodiment of this application. With reference to FIG. 7, the following describes in detail a related embodiment in which the ECS determines the EES associated with the EAS corresponding to the second application. As shown in FIG. 7, the method may include but is not limited to S701 to S705.

S701: an EEC determines at least one of an application identifier of a second application and an EAS bundle identifier corresponding to the second application.

The second application is any application in a terminal. It should be noted that the second application and a first application may be the same or different.

S702: The EEC sends an edge computing platform discovery request message to an ECS, and correspondingly, the ECS receives the edge computing platform discovery request message from the EEC.

The edge computing platform discovery request message is used to request to obtain at least one EES from the ECS.

Optionally, the edge computing platform discovery request message includes at least one of the following information: the application identifier of the second application and the EAS bundle identifier corresponding to the second application. It should be noted that the application identifier of the second application and/or the EAS bundle identifier corresponding to the second application may be directly carried in the edge computing platform discovery request message, or may be carried in an application message of the second application in the edge computing platform discovery request message.

Optionally, the edge computing platform discovery request message may further include an EAS identifier.

S703: The ECS determines, based on at least one of the application identifier of the second application and the EAS bundle identifier corresponding to the second application, an EES associated with an EAS corresponding to the second application.

In an optional implementation, the ECS determines, based on the application identifier of the second application and an application identifier corresponding to an EAS associated with the EES on the ECS, the EES associated with the EAS corresponding to the second application. In another optional implementation, the ECS determines, based on the EAS bundle identifier corresponding to the second application and an EAS bundle identifier corresponding to an EAS associated with the EES on the ECS, the EES associated with the EAS corresponding to the second application. For related descriptions, refer to step S503. Details are not described again.

It should be noted that the "EES associated with the EAS corresponding to the second application" described in this embodiment of this application may also be referred to as the "EES corresponding to the second application". This is not limited. S704: The ECS sends an edge computing platform discovery response message to the EEC, and correspondingly, the EEC receives the edge computing platform discovery response message from the ECS.

Optionally, the edge computing platform discovery response message may include EES information of the at least one EES. The EES information includes but is not limited to an EES identifier (an EES ID), EAS information of the EAS associated with the EES, and the like. The EAS information includes but is not limited to at least one of an EAS identifier (an EAS ID), an application identifier corresponding to the EAS, and an EAS bundle identifier corresponding to the EAS. It should be noted that for other descriptions of the EAS information, reference may be made to step S304. Details are not described again. Optionally, the application identifier and/or the EAS bundle identifier corresponding to the EAS may alternatively be directly carried in the edge computing platform discovery response message or the EES information. This is not limited.

Optionally, the edge computing platform discovery response message further indicates a correspondence between the second application and an EAS associated with the at least one EES. Optionally, the edge computing platform discovery response message may explicitly indicate a correspondence between the second application and an EAS associated with the at least one EES. For example, the edge computing platform discovery response message includes an EAS identifier corresponding to the application identifier of the second application, and an EES identifier corresponding to the EAS identifier. Optionally, the edge computing platform discovery response message may implicitly indicate a correspondence between the second application and an EAS associated with the at least one EES. For example, when the edge computing platform discovery response message indicates that the EES discovery succeeds, the at least one EES in the edge computing platform discovery response message is the EES associated with the EAS corresponding to the second application. When the edge computing platform discovery response message indicates that the EES discovery fails, none of the at least one EAS in the edge computing platform discovery response message is the EES associated with the EAS corresponding to the second application.

Optionally, the edge computing platform discovery response message may not indicate the correspondence between the EAS associated with the at least one EES and the second application. Instead, third indication information indicates the correspondence between the second application and the EAS associated with the at least one EES. Details are not described in a related embodiment. It should be noted that the third indication information may be carried in the edge computing platform discovery response message, or may be carried in another message. This is not limited.

It should be noted that the at least one EES is the EES on the ECS.

S705: The EEC determines, based on the edge computing platform discovery response message, the EES associated with the EAS corresponding to the second application.

It should be noted that, in some embodiments, step S705 may not be performed in the method. This is not limited.

It should be noted that the method in FIG. 7 is described by using an example in which the third message is an edge computing platform discovery response message. When the third message is not the edge computing platform discovery response message, the method in FIG. 7 may not include step S702. This is not limited.

It should be noted that, when the method in FIG. 7 does not include step S702, the ECS may obtain, in another manner, the application identifier of the second application or the EAS bundle identifier corresponding to the second application. For example, the ECS obtains, via an EAS subscription message, the application identifier of the second application or the EAS bundle identifier corresponding to the second application. This is not limited.

It can be learned that, in this implementation, the ECS may determine, based on at least one of the application identifier of the second application and the EAS bundle identifier corresponding to the second application, an EES associated with an EAS corresponding to the first application, to effectively ensure that the EAS associated with the EES discovered in the initial EES discovery procedure can provide a service for the second application, so that an EES discovery failure is avoided, repeated execution of the EES discovery procedure is avoided, a service interruption delay is reduced, and use experience of the application is improved. In addition, it can also be effectively ensured that the EAS discovered in the initial EAS discovery procedure can provide a service for the second application in the terminal, so that an EAS discovery failure is avoided, repeated execution of the EAS discovery procedure is avoided, a service interruption delay is reduced, and use experience of the application is improved.

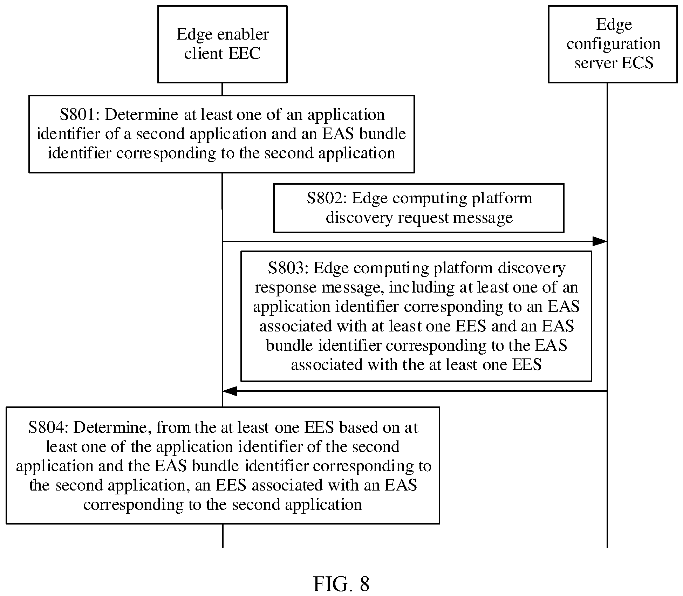

FIG. 8 is a schematic flowchart of still another edge application server discovery method according to an embodiment of this application. With reference to FIG. 8, the following describes in detail a related embodiment in which the EEC determines the EES associated with the EAS corresponding to the second application. As shown in FIG. 8, the method may include but is not limited to S801 to S804.

S801: An EEC determines at least one of an application identifier of a second application and an EAS bundle identifier corresponding to the second application.

It should be noted that for related descriptions, reference may be made to step S701. Details are not described again.

S802: The EEC sends an edge computing platform discovery request message to an ECS, and correspondingly, the ECS receives the edge computing platform discovery request message from the EEC.

The edge computing platform discovery request message is used to request to obtain at least one EES from the ECS.

Optionally, the EES discovery request message may further include an EAS identifier

S803: The ECS sends an edge computing platform discovery response message to the EEC, and correspondingly, the EEC receives the edge computing platform discovery response message from the ECS.

Optionally, the edge computing platform discovery response message includes at least one of an application identifier corresponding to an EAS associated with the at least one EES and an EAS bundle identifier corresponding to the EAS associated with the at least one EES. It should be noted that, in another implementation, the application identifier and/or the EAS bundle identifier corresponding to the EAS associated with the at least one EES may be further carried in EES information or EAS information. This is not limited. It should be noted that the at least one EES is the EES on the ECS.

S804: The EEC determines, from the at least one EES based on at least one of the application identifier of the second application and the EAS bundle identifier corresponding to the second application, an EES associated with an EAS corresponding to the second application.

In an optional implementation, the EEC determines, based on the application identifier of the second application and the application identifier corresponding to the EAS associated with the at least one EES, the EES associated with the EAS corresponding to the second application. In another optional implementation, the EEC determines, based on the EAS bundle identifier corresponding to the second application and the EAS bundle identifier corresponding to the EAS associated with the at least one EES, the EES associated with the EAS corresponding to the second application. For related descriptions, refer to step S503. Details are not described again.

It should be noted that the "EES associated with the EAS corresponding to the second application" described in this embodiment of this application may also be referred to as the "EES corresponding to the second application". This is not limited.

The at least one EES is the EES on the ECS.

It should be noted that the method in FIG. 8 is described by using an example in which the third message is an edge computing platform discovery response message. When the third message is not the edge computing platform discovery response message, the method in FIG. 8 may not include step S802. This is not limited.

It can be learned that, in this implementation, the EEC may determine, based on at least one of the application identifier of the second application and the EAS bundle identifier corresponding to the second application, the EES associated with the EAS corresponding to the second application, and may discover, in the initial EES discovery procedure, the EES associated with the EAS corresponding to the first application, to effectively ensure that the EAS associated with the EES discovered in the initial EES discovery procedure can provide a service for the first application, so that an EES discovery failure is avoided, repeated execution of the EES discovery procedure is avoided, a service interruption delay is reduced, and use experience of the application is improved. In addition, it can also be effectively ensured that the EAS discovered in the initial EAS discovery procedure can provide a service for the first application in the terminal, so that an EAS discovery failure is avoided, repeated execution of the EAS discovery procedure is avoided, a service interruption delay is reduced, and use experience of the application is improved.

It should be noted that the method in FIG. 7 and the method in FIG. 8 are parallel solutions. Only the method in FIG. 7 may be performed, or only the method in FIG. 8 may be performed, or both the method in FIG. 7 and the method in FIG. 8 may be performed. This is not limited in this application.

It should be noted that the method in FIG. 7 and the method in FIG. 8 may be further used in combination with at least one of the method in FIG. 3A and FIG. 3B to the method in FIG. 6. For example, the method in FIG. 7 may be used in combination with the method in FIG. 3A and FIG. 3B and the method in FIG. 5. The initial EES discovery procedure in FIG. 7 is first performed, then the EES discovery procedure in the application context relocation process in FIG. 5 is performed, and finally the EAS discovery procedure in the application context relocation process shown in FIG. 5 is performed. For another example, the method shown in FIG. 8 may be used in combination with the method shown in FIG. 4A and FIG. 4B and the method shown in FIG. 6. The initial EES discovery procedure in FIG. 8 is first performed, then the EES discovery procedure in the application context relocation process in FIG. 6 is performed, and finally the EAS discovery procedure in the application context relocation process in FIG. 3A and FIG. 3B is performed.

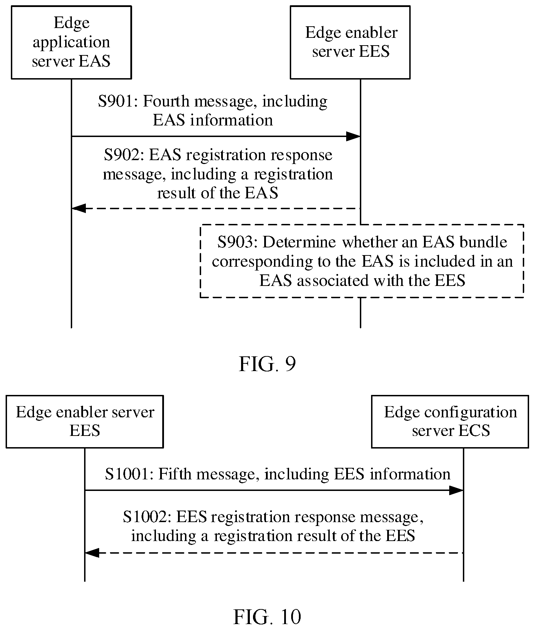

FIG. 9 is a schematic flowchart of still another edge application server discovery method. In the method, an EAS may upload, to an EES, information about an application for which the EAS can provide a service. The method in FIG. 9 may be used in combination with at least one of the method in FIG. 3A and FIG. 3B to the method in FIG. 8. As shown in FIG. 9, the method may include but is not limited to S901 to S903.

S901: An EAS sends a fourth EAS message to an EES, and correspondingly, the EES receives a fourth message from the EAS.

Optionally, the fourth message may include EAS information, where the EAS information may include but is not limited to at least one of an application identifier corresponding to the EAS and an EAS bundle identifier corresponding to the EAS. It should be noted that, in some implementations, the EAS information may further include an EAS identifier, an EAS address, an EAS type, an EAS feature, and the like. This is not limited. It should be noted that, in some implementations, the application identifier corresponding to the EAS and/or the EAS bundle identifier corresponding to the EAS may alternatively be directly carried in the fourth message. This is not limited.

It should be noted that the EAS can be any EAS. For example, the EAS may be an S-EAS. The S-EAS may send the fourth message to the S-EES, and correspondingly, the S-EES receives the fourth message from the S-EAS. For another example, the EAS may be a T-EAS. The T-EAS sends the fourth message to a T-EES, and correspondingly, the T-EES receives the fourth message from the T-EAS.

It should be noted that there may be at least one EAS.

Optionally, the fourth message may be an EAS registration request message. When the EES receives an EAS registration request message from at least one EAS, the method may further include S902.

S902: The EES separately sends a corresponding EAS registration response message to the EAS, and correspondingly, the EAS receives the EAS registration response message from the EES.

Optionally, the EAS registration response message may include a registration result of the EAS, where the registration result indicates that the EAS registration succeeds or fails. Optionally, when the registration result indicates that the EAS registration fails, the EAS registration response message may further include a registration failure cause.

It should be noted that, in some implementations, the information about the EAS on the EES may alternatively be configured by a network management system, or preconfigured. This is not limited. In this case, the EAS may send the registration request message to the EES.

In some implementations, the method may further include step S903: The EES determines whether an EAS bundle corresponding to the EAS is included in the EAS associated with the EES.

In an optional implementation, if the EAS bundle corresponding to the EAS is not included in the EAS associated with the EES, the EES updates the application identifier corresponding to the EAS, where the EAS bundle corresponding to an updated application is included in the EAS associated with the EES.

In an optional implementation, if the EAS bundle corresponding to the EAS is not included in the EAS associated with the EES, the EES sends an EAS query request message to another EES other than the EES, where the EAS query request message includes an EAS identifier of each EAS in a target EAS bundle, and there is an EAS other than the EAS associated with the EES in the target EAS bundle; and the EES receives an EAS query response message from the another EES.

Optionally, the EAS query response message includes a query result of the EAS, where the query result may indicate that the EAS query succeeds or the EAS query fails.

Optionally, the EAS query response message may alternatively include the EAS information (for example, the EAS identifier) that can be queried.

It should be noted that the EAS associated with the EES may alternatively be replaced with an EAS in an EDN or an EAS in a specific range. This is not limited.

It can be learned that, in this implementation, the EAS may upload the EAS information to the EES via the fourth information, so that the EES obtains the EAS information of the EAS associated with the EES, so as to subsequently perform at least one of an initial EES discovery procedure, an initial EAS discovery procedure, an EES discovery procedure in an application context relocation process, and an EAS discovery procedure in an application context relocation process. In addition, the EES may further determine, based on an EAS bundle required by an application corresponding to the EAS, whether the EAS associated with the EES can support the application corresponding to the EAS, and trigger the EAS to update the EAS information, that is, trigger the EAS to update an application for which the EAS can actually provide a service in an EAS range. In this way, a correspondence between the EAS and the applications is ensured.

FIG. 10 is a schematic flowchart of still another edge application server discovery method. In the method, an EES may upload, to an ECS, information about an application for which an EAS associated with the EES can provide a service. The method in FIG. 10 may be used in combination with at least one of the method in FIG. 3A and FIG. 3B to the method in FIG. 9. As shown in FIG. 10, FIG. 10 may include but is not limited to S1001 and S1002.

S1001: An EES sends a fifth EES message to an ECS, and correspondingly, the ECS receives the fifth message from the EES.

Optionally, the fifth message may include but is not limited to EES information. The EES information may include but is not limited to EAS information of an EAS associated with the EES. The EAS information may include but is not limited to at least one of an application identifier corresponding to the EAS and an EAS bundle identifier corresponding to the EAS. It should be noted that, in some implementations, the EES information may further include an EES identifier. This is not limited. It should be noted that, in some implementations, the EAS information may further include an EAS identifier. This is not limited.

It should be noted that, in some implementations, the application identifier corresponding to the EAS associated with the EES and/or the EAS bundle identifier corresponding to the EAS associated with the EES may alternatively be directly carried in the fifth message. This is not limited.

It should be noted that the EES may be any EES. For example, the EES may be an S-EES. The S-EES may send the fifth message to the ECS, and correspondingly, the ECS receives the fifth message from the S-EES. For another example, the EES may be a T-EES. The T-EES sends the fifth message to the ECS, and correspondingly, the ECS receives the fifth message from the T-EES.

It should be noted that there may be at least one EES.

Optionally, the fifth message may be an EES registration request message. When the ECS receives an EES registration request message from at least one EES, the method may further include S 1002.

S1002: The ECS separately sends a corresponding EES registration response message to the EES, and correspondingly, the EES receives the EES registration response message from the ECS.

Optionally, the EES registration response message includes a registration result of the EES, where the registration result indicates that the EES registration succeeds or fails. Optionally, when the registration result indicates that the EES registration fails, the EES registration response message may further include a registration failure cause.

It should be noted that, in some implementations, the EES information on the ECS may alternatively be configured by a network management system, or preconfigured. This is not limited. In this case, the EES may send the registration request message to the ECS.

It can be learned that, in this implementation, the EES may upload the EES information to the ECS via the fifth message, so that the ECS obtains the EAS information associated with each EES, so as to subsequently perform at least one of an initial EES discovery procedure, an initial EAS discovery procedure, an EES discovery procedure in an application context relocation process, and an EAS discovery procedure in an application context relocation process.

To implement the functions in the methods provided in the embodiments of this application, the S-EES, the T-EES, the ECS, the S-EAS, the EAS, or the EES may include a hardware structure and/or a software module, to implement the foregoing functions in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

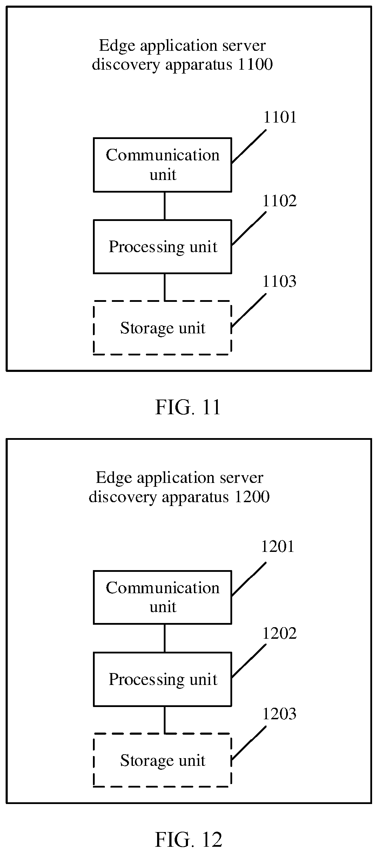

As shown in FIG. 11, an embodiment of this application provides an edge application server discovery apparatus 1100. The apparatus 1100 may be a component (for example, an integrated circuit or a chip) of an S-EES, a T-EES, an ECS, an S-EAS, an EEC, an EAS, or an EES. Alternatively, the apparatus 1100 may be another communication unit, configured to implement the method in method embodiments of this application. The apparatus 1100 may include a communication unit 1101 and a processing unit 1102. The processing unit 1102 is configured to control the communication unit 1101 to perform data/signaling receiving and sending. Optionally, the apparatus 1100 may further include a storage unit 1103.

In a possible design, the communication unit 1101 is configured to receive a first message from a T-EES, where the first message is used to determine an EAS, and at least one EAS corresponds to a first application.

In an optional implementation, the first message further indicates a correspondence between the at least one EAS and the first application.

In an optional implementation, the first message includes at least one of an application identifier corresponding to an EAS and an EAS bundle identifier corresponding to the EAS.

In an optional implementation, after the communication unit 1101 is configured to receive the first message from the T-EES, the processing unit 1102 is further configured to determine, from the at least one EAS based on an application identifier of the first application and an application identifier corresponding to the EAS, an EAS corresponding to the first application.

In an optional implementation, after the communication unit 1101 is configured to receive the first message from the T-EES, the processing unit 1102 is further configured to determine, from the at least one EAS based on an EAS bundle identifier corresponding to the first application and an EAS bundle identifier corresponding to the EAS, an EAS corresponding to the first application.

In an optional implementation, before the communication unit 1101 is configured to receive the first message from the T-EES, the communication unit 1101 is further configured to send an EAS discovery request message to the T-EES, where the EAS discovery request message is used to request to obtain at least one EAS from the T-EES, and the first message is an EAS discovery response message.

In an optional implementation, the EAS discovery request message includes at least one of the following information: the application identifier of the first application and the EAS bundle identifier corresponding to the first application.

In an optional implementation, before the communication unit 1101 is configured to send the EAS discovery request message to the T-EES, the communication unit 1101 is further configured to receive a second message from the ECS, where the second message is used to determine at least one EES; an EAS associated with the at least one EES corresponds to the first application, the at least one EES corresponds to the first application, and the at least one EES includes the T-EES.

In an optional implementation, the second message further indicates a correspondence between the first application and the at least one EAS associated with the EES.

In an optional implementation, the second message includes at least one of the application identifier corresponding to the EAS associated with the at least one EES and the EAS bundle identifier corresponding to the EAS associated with the at least one EES.

In an optional implementation, after the communication unit 1101 is configured to receive the second message from the ECS, the processing unit 1102 is further configured to determine, from the at least one EES based on the application identifier of the first application and the application identifier corresponding to the EAS associated with the EES, an EES associated with the EAS corresponding to the first application.

In an optional implementation, after the communication unit 1101 is configured to receive the second message from the ECS, the processing unit 1102 is further configured to: determine, from the at least one EES based on the EAS bundle identifier corresponding to the first application and the EAS bundle identifier corresponding to the EAS associated with the EES, an EES associated with the EAS corresponding to the first application.

In an optional implementation, before the communication unit 1101 is configured to receive the second message from the ECS, the communication unit 1101 is further configured to send an EES discovery request message to the ECS, where the EES discovery request message is used to request to obtain the at least one EES from the ECS; and the second message is an EES discovery response message.

In an optional implementation, the EES discovery request message includes at least one of the following information: the application identifier of the first application and the EAS bundle identifier corresponding to the first application.

In an optional implementation, before the communication unit 1101 is configured to send the EAS discovery request message to the T-EES, the communication unit 1101 is further configured to receive the EAS discovery request message from the S-EAS.

In an optional implementation, the EAS discovery request message includes at least one of the following information: the application identifier of the first application and the EAS bundle identifier corresponding to the first application.

In an optional implementation, after the communication unit 1101 receives the first message from the T-EES, the communication unit 1101 is further configured to send an EAS discovery response message to the S-EAS.

In another possible design, the communication unit 1101 is configured to send the first message to the S-EES, where the first message is used to determine the at least one EAS, and the at least one EAS corresponds to a first application.

In an optional implementation, the first message further indicates a correspondence between the at least one EAS and the first application.

In an optional implementation, before the communication unit 1101 is configured to send the first message to the S-EES, the processing unit 1102 is further configured to determine, based on the application identifier of the first application and the application identifier corresponding to the EAS, an EAS corresponding to the first application.

In an optional implementation, before the communication unit 1101 is configured to send the first message to the S-EES, the processing unit 1102 is further configured to determine, based on the EAS bundle identifier corresponding to the first application and the EAS bundle identifier corresponding to the EAS, an EAS corresponding to the first application.

In an optional implementation, the first message includes at least one of an application identifier corresponding to an EAS and an EAS bundle identifier corresponding to the EAS.

In an optional implementation, before the communication unit 1101 is configured to send the first message to the S-EES, the communication unit 1101 is further configured to receive an EAS discovery request message from the S-EES, where the EAS discovery request message is used to request to obtain the at least one EAS from the T-EES, and the first message is an EAS discovery response message.

In an optional implementation, the EAS discovery request message includes at least one of the following information: the application identifier of the first application and the EAS bundle identifier corresponding to the first application.

In another possible design, the communication unit 1101 is configured to send a second message to an S-EES, where the second message is used to determine at least one EES, an EAS associated with the at least one EES corresponds to a first application, and the at least one EES corresponds to the first application.

In an optional implementation, the second message further indicates a correspondence between the first application and the at least one EAS associated with the EES.

In an optional implementation, before the communication unit 1101 is configured to send the second message to the S-EES, the processing unit 1102 is further configured to: determine, from the at least one EES based on the application identifier of the first application and the application identifier corresponding to the EAS associated with the EES, an EES associated with the EAS corresponding to the first application.

In an optional implementation, before the communication unit 1101 is configured to send the second message to the S-EES, the processing unit 1102 is further configured to: determine, from the at least one EES based on the EAS bundle identifier corresponding to the first application and the EAS bundle identifier corresponding to the EAS associated with the EES, an EES associated with the EAS corresponding to the first application.

In an optional implementation, the second message includes at least one of the application identifier corresponding to the EAS associated with the at least one EES and the EAS bundle identifier corresponding to the EAS associated with the at least one EES.

In an optional implementation, before the communication unit 1101 is configured to send the second message to the S-EES, the communication unit 1101 is further configured to receive an EES discovery request message from the S-EES, where the EES discovery request message is used to request to obtain at least one EES from the ECS; and the second message is an EES discovery response message.

In an optional implementation, the EES discovery request message includes at least one of the following information: the application identifier of the first application and the EAS bundle identifier corresponding to the first application.

In another possible design, the communication unit 1101 is configured to send an EAS discovery request message to an S-EES, where the EAS discovery request message is used to request to obtain at least one EAS, and the at least one EAS corresponds to a first application.

In an optional implementation, after the communication unit 1101 is configured to send the EAS discovery request message to the S-EES, the communication unit 1101 is further configured to receive an EAS discovery response message from the S-EES, where the EAS discovery response message is used to determine at least one EAS.

In an optional implementation, the EAS discovery response message further indicates a correspondence between the at least one EAS and the first application.

In an optional implementation, the EAS discovery response message includes at least one of an application identifier corresponding to an EAS and an EAS bundle identifier corresponding to the EAS.

In an optional implementation, after the communication unit 1101 is configured to receive the EAS discovery response message from the S-EES, the processing unit 1102 is further configured to determine, from the at least one EAS based on the application identifier of the first application and the application identifier corresponding to the EAS, an EAS corresponding to the first application.

In an optional implementation, after the communication unit 1101 is configured to receive the EAS discovery response message from the S-EES, the processing unit 1102 is further configured to determine, from the at least one EAS based on the EAS bundle identifier corresponding to the first application and the EAS bundle identifier corresponding to the EAS, an EAS corresponding to the first application.

In an optional implementation, the EAS discovery request message includes at least one of the following information: the application identifier of the first application and the EAS bundle identifier corresponding to the first application.

In another possible design, the communication unit 1101 is configured to send a third message to an EEC, where the third message is used to determine at least one EES, an EAS associated with the at least one EES corresponds to a second application, and the at least one EES corresponds to the second application.

In an optional implementation, the third message further indicates a correspondence between the second application and the EAS associated with the at least one EES.

In an optional implementation, before the communication unit 1101 is configured to send the third message to the EEC, the processing unit 1102 is further configured to determine, based on an application identifier of the second application and an application identifier corresponding to the EAS associated with the EES, an EES associated with the EAS corresponding to the second application.

In an optional implementation, before the communication unit 1101 is configured to send the third message to the EEC, the processing unit 1102 is further configured to determine, based on an EAS bundle identifier corresponding to the second application and an EAS bundle identifier corresponding to the EAS associated with the EES, an EES associated with the EAS corresponding to the second application.

In an optional implementation, the third message includes at least one of the application identifier corresponding to the EAS associated with the at least one EES and the EAS bundle identifier corresponding to the EAS associated with the at least one EES.

In an optional implementation, before the communication unit 1101 is configured to send the third message to the EEC, the communication unit 1101 is further configured to receive an edge computing platform discovery request message from the EEC, where the edge computing platform discovery request message is used to request to obtain at least one EES from the ECS, and the third message is an edge computing platform discovery response message

In an optional implementation, the edge computing platform discovery request message includes at least one of the following information: the application identifier of the second application and the EAS bundle identifier corresponding to the second application.

In another possible design, the communication unit 1101 is configured to send a fourth message to the EES, where the fourth message includes EAS information of the EAS, and the EAS information includes at least one of an application identifier corresponding to the EAS and an EAS bundle identifier corresponding to the EAS.

In another possible design, the communication unit 1101 is configured to receive a fourth message from at least one EAS, where the fourth message includes EAS information, and the EAS information includes at least one of an application identifier corresponding to an EAS and an EAS bundle identifier corresponding to the EAS.

In another possible design, the communication unit 1101 is configured to send a fifth message to the ECS, where the fifth message includes EES information, the EES information includes EAS information of the EAS associated with the EES, and the EAS information includes at least one of an application identifier corresponding to the EAS and an EAS bundle identifier corresponding to the EAS.

In another possible design, the communication unit 1101 is configured to receive a fifth message from at least one EES, where the fifth message includes EES information, the EES information includes EAS information of the EAS associated with the EES, and the EAS information includes at least one of an application identifier corresponding to the EAS and an EAS bundle identifier corresponding to the EAS.

This embodiment of this application and the methods shown in FIG. 3A to FIG. 10 are based on a same concept, and technical effects brought by this embodiment of this application and the methods shown in FIG. 3A to FIG. 10 are also the same. For a specific principle, refer to the descriptions of the foregoing embodiments. Details are not described.

To implement functions in the method provided in embodiments of this application, the EEC may include a hardware structure and/or a software module, to implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

As shown in FIG. 12, an embodiment of this application provides another edge application server discovery apparatus 1200. The apparatus 1200 may be an EEC component (for example, an integrated circuit or a chip). Alternatively, the apparatus 1200 may be another communication unit, configured to implement the method in method embodiments of this application. The apparatus 1200 may include a communication unit 1101 and a processing unit 1102. The processing unit 1202 is configured to control a communication unit 1201 to perform data/signaling receiving and sending. Optionally, the apparatus 1200 may further include a storage unit 1203.

In a possible design, the communication unit 1201 is configured to receive a third message from an ECS, where the third message is used to determine at least one EES, an EAS associated with the at least one EES corresponds to a second application, and the at least one EES corresponds to the second application.

In an optional implementation, the third message further indicates a correspondence between the second application and the EAS associated with the at least one EES.

In an optional implementation, the third message includes at least one of the application identifier corresponding to the EAS associated with the at least one EES and the EAS bundle identifier corresponding to the EAS associated with the at least one EES.

In an optional implementation, after the communication unit 1201 is configured to receive the third message from the ECS, the processing unit 1202 is configured to: determine, from the at least one EES based on the application identifier of the second application and the application identifier corresponding to the EAS associated with the EES, an EES associated with the EAS corresponding to the second application.

In an optional implementation, after the communication unit 1201 is configured to receive the third message from the ECS, the processing unit 1202 is further configured to: determine, from the at least one EES based on the EAS bundle identifier corresponding to the second application and the EAS bundle identifier corresponding to the EAS associated with the EES, an EES associated with the EAS corresponding to the second application.

In an optional implementation, before the communication unit 1201 is configured to receive the third message from the ECS, the communication unit 1101 is further configured to send an edge computing platform discovery request message to the ECS, where the edge computing platform discovery request message is used to request to obtain at least one EES from the ECS, and the third message is an edge computing platform discovery response message.

In an optional implementation, the edge computing platform discovery request message includes at least one of the following information: the application identifier of the second application and the EAS bundle identifier corresponding to the second application.

This embodiment of this application and the methods shown in FIG. 3A to FIG. 10 are based on a same concept, and technical effects brought by this embodiment of this application and the methods shown in FIG. 3A to FIG. 10 are also the same. For a specific principle, refer to the descriptions of the foregoing embodiments. Details are not described.

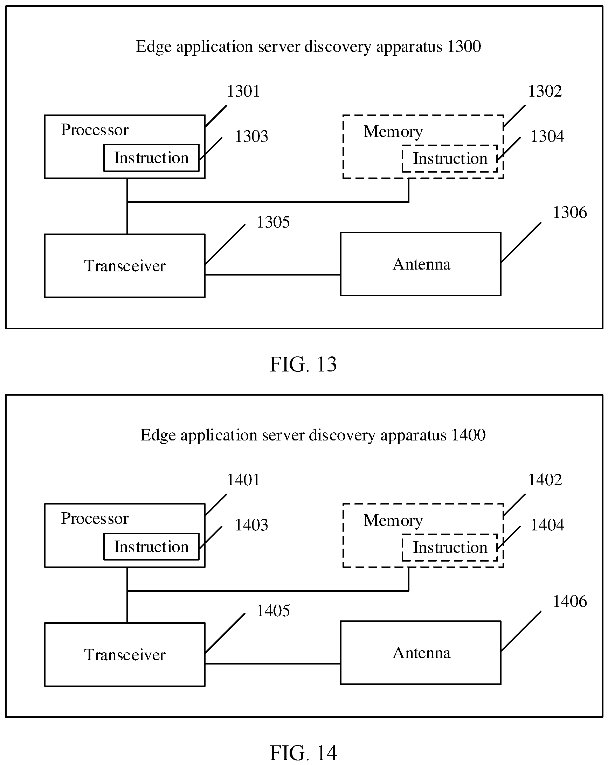

Embodiments of this application further provide still another edge application server discovery apparatus 1300, as shown in FIG. 13. The apparatus 1300 may be an S-EES, a T-EES, an ECS, an S-EAS, an EAS, or an EES, or may be a chip, a chip system, a processor, or the like that supports an S-EES, a T-EES, an ECS, an S-EAS, an EAS, or an EES to implement the foregoing method. The apparatus may be configured to implement the method described in the foregoing method embodiment. For details, refer to the descriptions in the foregoing method embodiment.

The apparatus 1300 may include one or more processors 1301. The processor may be configured to implement some or all of functions of the S-EES, the T-EES, the ECS, the S-EAS, the EAS, or the EES by using a logic circuit or by running a computer program. The processor 1301 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (Central Processing Unit, CPU). The baseband processor may be configured to process a communication protocol and communication data. The central processing unit may be configured to control an apparatus (for example, a base station, a baseband chip, a terminal, a terminal chip, a DU, or a CU), execute a software program, and process data of the software program.

Optionally, the apparatus 1300 may include one or more memories 1302, where the memory 1302 may store instructions 1304, and the instructions may be run on the processor 1301, so that the edge application server discovery apparatus 1300 performs the method described in the foregoing method embodiments. Optionally, the memory 1302 may further store data. The processor 1301 and the memory 1302 may be separately disposed, or may be integrated together.

The memory 1302 may include but is not limited to a non-volatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM or a compact disc read-only memory (compact disc read-only memory, CD-ROM), or the like.

Optionally, the edge application server discovery apparatus 1300 may further include a transceiver 1305 and an antenna 1306. The transceiver 1305 may be referred to as a transceiver unit, a transceiver machine, a transceiver circuit, or the like, and is configured to implement a transceiver function. The transceiver 1305 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a transmitting function.

In a possible design, the transceiver 1305 is configured to receive a first message from a T-EES, where the first message is used to determine an EAS, and at least one EAS corresponds to a first application.

In an optional implementation, the first message further indicates a correspondence between the at least one EAS and the first application.

In an optional implementation, the first message includes at least one of an application identifier corresponding to an EAS and an EAS bundle identifier corresponding to the EAS.

In an optional implementation, after the transceiver 1305 is configured to receive the first message from the T-EES, the processor 1301 is further configured to determine, from the at least one EAS based on an application identifier of the first application and an application identifier corresponding to the EAS, an EAS corresponding to the first application.

In an optional implementation, after the transceiver 1305 is configured to receive the first message from the T-EES, the processor 1301 is further configured to determine, from the at least one EAS based on an EAS bundle identifier corresponding to the first application and an EAS bundle identifier corresponding to the EAS, an EAS corresponding to the first application.

In an optional implementation, before the transceiver 1305 is configured to receive the first message from the T-EES, the transceiver 1305 is further configured to send an EAS discovery request message to the T-EES, where the EAS discovery request message is used to request to obtain at least one EAS from the T-EES, and the first message is an EAS discovery response message.

In an optional implementation, the EAS discovery request message includes at least one of the following information: the application identifier of the first application and the EAS bundle identifier corresponding to the first application.

In an optional implementation, before the transceiver 1305 is configured to send the EAS discovery request message to the T-EES, the transceiver 1305 is further configured to receive a second message from the ECS, where the second message is used to determine at least one EES, an EAS associated with the at least one EES corresponds to the first application, the at least one EES corresponds to the first application, and the at least one EES includes the T-EES.

In an optional implementation, the second message further indicates a correspondence between the first application and the at least one EAS associated with the EES.

In an optional implementation, the second message includes at least one of the application identifier corresponding to the EAS associated with the at least one EES and the EAS bundle identifier corresponding to the EAS associated with the at least one EES.

In an optional implementation, after the transceiver 1305 is configured to receive the second message from the ECS, the processor 1301 is further configured to: determine, from the at least one EES based on the application identifier of the first application and the application identifier corresponding to the EAS associated with the EES, an EES associated with the EAS corresponding to the first application.

In an optional implementation, after the transceiver 1305 is configured to receive the second message from the ECS, the processor 1301 is further configured to: determine, from the at least one EES based on the EAS bundle identifier corresponding to the first application and the EAS bundle identifier corresponding to the EAS associated with the EES, an EES associated with the EAS corresponding to the first application.

In an optional implementation, before the transceiver 1305 is configured to receive the second message from the ECS, the transceiver 1305 is further configured to send an EES discovery request message to the ECS, where the EES discovery request message is used to request to obtain at least one EES from the ECS, and the second message is an EES discovery response message.

In an optional implementation, the EES discovery request message includes at least one of the following information: the application identifier of the first application and the EAS bundle identifier corresponding to the first application.

In an optional implementation, before the transceiver 1305 is configured to send the EAS discovery request message to the T-EES, the transceiver 1305 is further configured to receive the EAS discovery request message from the S-EAS.

In an optional implementation, the EAS discovery request message includes at least one of the following information: the application identifier of the first application and the EAS bundle identifier corresponding to the first application.

In an optional implementation, after the transceiver 1305 receives the first message from the T-EES, the transceiver 1305 is further configured to send an EAS discovery response message to the S-EAS.

In another possible design, the transceiver 1305 is configured to send the first message to the S-EES, where the first message is used to determine the at least one EAS, and the at least one EAS corresponds to a first application.

In an optional implementation, the first message further indicates a correspondence between the at least one EAS and the first application.

In an optional implementation, before the transceiver 1305 is configured to send the first message to the S-EES, the processor 1301 is further configured to determine, based on the application identifier of the first application and the application identifier corresponding to the EAS, an EAS corresponding to the first application.

In an optional implementation, before the transceiver 1305 is configured to send the first message to the S-EES, the processor 1301 is further configured to determine, based on the EAS bundle identifier corresponding to the first application and the EAS bundle identifier corresponding to the EAS, an EAS corresponding to the first application.

In an optional implementation, the first message includes at least one of an application identifier corresponding to an EAS and an EAS bundle identifier corresponding to the EAS.

In an optional implementation, before the transceiver 1305 is configured to send the first message to the S-EES, the transceiver 1305 is further configured to receive an EAS discovery request message from the S-EES, where the EAS discovery request message is used to request to obtain at least one EAS from the T-EES, and the first message is an EAS discovery response message.

In an optional implementation, the EAS discovery request message includes at least one of the following information: the application identifier of the first application and the EAS bundle identifier corresponding to the first application.

In another possible design, the transceiver 1305 is configured to send a second message to an S-EES, where the second message is used to determine at least one EES, an EAS associated with the at least one EES corresponds to a first application, and the at least one EES corresponds to the first application.

In an optional implementation, the second message further indicates a correspondence between the first application and the at least one EAS associated with the EES.

In an optional implementation, before the transceiver 1305 is configured to send the second message to the S-EES, the processor 1301 is further configured to: determine, from the at least one EES based on the application identifier of the first application and the application identifier corresponding to the EAS associated with the EES, an EES associated with the EAS corresponding to the first application.

In an optional implementation, before the transceiver 1305 is configured to send the second message to the S-EES, the processor 1301 is further configured to: determine, from the at least one EES based on the EAS bundle identifier corresponding to the first application and the EAS bundle identifier corresponding to the EAS associated with the EES, an EES associated with the EAS corresponding to the first application.

In an optional implementation, the second message includes at least one of the application identifier corresponding to the EAS associated with the at least one EES and the EAS bundle identifier corresponding to the EAS associated with the at least one EES.

In an optional implementation, before the transceiver 1305 is configured to send the second message to the S-EES, the transceiver 1305 is further configured to receive an EES discovery request message from the S-EES, where the EES discovery request message is used to request to obtain at least one EES from the ECS, and the second message is an EES discovery response message.

In an optional implementation, the EES discovery request message includes at least one of the following information: the application identifier of the first application and the EAS bundle identifier corresponding to the first application.

In another possible design, the transceiver 1305 is configured to send an EAS discovery request message to an S-EES, where the EAS discovery request message is used to request to obtain at least one EAS, and the at least one EAS corresponds to a first application.

In an optional implementation, after the transceiver 1305 is configured to send the EAS discovery request message to the S-EES, the transceiver 1305 is further configured to receive an EAS discovery response message from the S-EES, where the EAS discovery response message is used to determine at least one EAS.

In an optional implementation, the EAS discovery response message further indicates a correspondence between the at least one EAS and the first application.

In an optional implementation, the EAS discovery response message includes at least one of an application identifier corresponding to an EAS and an EAS bundle identifier corresponding to the EAS.

In an optional implementation, after the transceiver 1305 is configured to receive the EAS discovery response message from the S-EES, the processor 1301 is further configured to determine, from the at least one EAS based on the application identifier of the first application and the application identifier corresponding to the EAS, an EAS corresponding to the first application.

In an optional implementation, after the transceiver 1305 is configured to receive the EAS discovery response message from the S-EES, the processor 1301 is further configured to determine, from the at least one EAS based on the EAS bundle identifier corresponding to the first application and the EAS bundle identifier corresponding to the EAS, an EAS corresponding to the first application.

In an optional implementation, the EAS discovery request message includes at least one of the following information: the application identifier of the first application and the EAS bundle identifier corresponding to the first application.

In another possible design, the transceiver 1305 is configured to send a third message to the EEC, where the third message is used to determine at least one EES, an EAS associated with the at least one EES corresponds to a second application, and the at least one EES corresponds to the second application.

In an optional implementation, the third message further indicates a correspondence between the second application and the EAS associated with the at least one EES.

In an optional implementation, before the transceiver 1305 is configured to send the third message to the EEC, the processor 1301 is further configured to determine, based on the application identifier of the second application and the application identifier corresponding to the EAS associated with the EES, an EES associated with the EAS corresponding to the second application.

In an optional implementation, before the transceiver 1305 is configured to send the third message to the EEC, the processor 1301 is further configured to determine, based on an EAS bundle identifier corresponding to the second application and an EAS bundle identifier corresponding to the EAS associated with the EES, an EES associated with the EAS corresponding to the second application.

In an optional implementation, the third message includes at least one of the application identifier corresponding to the EAS associated with the at least one EES and the EAS bundle identifier corresponding to the EAS associated with the at least one EES.

In an optional implementation, before the transceiver 1305 is configured to send the third message to the EEC, the transceiver 1305 is further configured to receive an edge computing platform discovery request message from the EEC, where the edge computing platform discovery request message is used to request to obtain at least one EES from the ECS; and the third message is an edge computing platform discovery response message.

In an optional implementation, the edge computing platform discovery request message includes at least one of the following information: the application identifier of the second application and the EAS bundle identifier corresponding to the second application.

In another possible design, the transceiver 1305 is configured to send a fourth message to the EES, where the fourth message includes EAS information of the EAS, and the EAS information includes at least one of an application identifier corresponding to the EAS and an EAS bundle identifier corresponding to the EAS.

In another possible design, the transceiver 1305 is configured to receive a fourth message from at least one EAS, where the fourth message includes EAS information, and the EAS information includes at least one of an application identifier corresponding to an EAS and an EAS bundle identifier corresponding to the EAS.

In another possible design, the transceiver 1305 is configured to send a fifth message to the ECS, where the fifth message includes EES information, the EES information includes EAS information of an EAS associated with the EES, and the EAS information includes at least one of an application identifier corresponding to an EAS and an EAS bundle identifier corresponding to the EAS.

In another possible design, the transceiver 1305 is configured to receive a fifth message from at least one EES, where the fifth message includes EES information, the EES information includes EAS information of the EAS associated with the EES, and the EAS information includes at least one of an application identifier corresponding to the EAS and an EAS bundle identifier corresponding to the EAS.

In another possible design, the processor 1301 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1301 may store instructions 1303, and the instructions 1303 are run on the processor 1301, so that the edge application server discovery apparatus 1300 may perform the method described in the foregoing method embodiments. The instructions 1303 may be built into the processor 1301. In this case, the processor 1301 may be implemented by using hardware.

In still another possible design, the edge application server discovery apparatus 1300 may include a circuit, and the circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

This embodiment of this application and the methods shown in FIG. 3A to FIG. 10 are based on a same concept, and technical effects brought by this embodiment of this application and the methods shown in FIG. 3A to FIG. 10 are also the same. For a specific principle, refer to the descriptions of the foregoing embodiments. Details are not described.

Embodiments of this application further provide still another edge application server discovery apparatus 1400, as shown in FIG. 14. The apparatus 1400 may be an EEC, or may be a chip, a chip system, a processor, or the like that supports an EEC in implementing the foregoing method. The apparatus may be configured to implement the method described in the foregoing method embodiment. For details, refer to the descriptions in the foregoing method embodiment.

The apparatus 1400 may include one or more processors 1401. The processor may be configured to implement some or all of the functions of the EEC by using a logic circuit or by running a computer program. The processor 1401 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (Central Processing Unit, CPU). The baseband processor may be configured to process a communication protocol and communication data. The central processing unit may be configured to control an apparatus (for example, a base station, a baseband chip, a terminal, a terminal chip, a DU, or a CU), execute a software program, and process data of the software program.

Optionally, the apparatus 1400 may include one or more memories 1402, where the memory 1402 may store instructions 1404, and the instructions may be run on the processor 1401, so that the edge application server discovery apparatus 1400 performs the method described in the foregoing method embodiments. Optionally, the memory 1402 may further store data. The processor 1401 and the memory 1402 may be separately disposed, or may be integrated.

The memory 1402 may include but is not limited to a non-volatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM or a compact disc read-only memory (compact disc read-only memory, CD-ROM), or the like.

Optionally, the edge application server discovery apparatus 1400 may further include a transceiver 1405 and an antenna 1406. The transceiver 1405 may be referred to as a transceiver unit, a transceiver machine, a transceiver circuit, or the like, and is configured to implement a transceiver function. The transceiver 1405 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

In a possible design, the transceiver 1405 is configured to receive a third message from an ECS, where the third message is used to determine at least one EES, an EAS associated with the at least one EES corresponds to a second application, and the at least one EES corresponds to the second application.

In an optional implementation, the third message further indicates a correspondence between the second application and the EAS associated with the at least one EES.

In an optional implementation, the third message includes at least one of the application identifier corresponding to the EAS associated with the at least one EES and the EAS bundle identifier corresponding to the EAS associated with the at least one EES.

In an optional implementation, after the transceiver 1405 is configured to receive the third message from the ECS, the processor 1401 is configured to: determine, from the at least one EES based on an application identifier of the second application and an application identifier corresponding to the EAS associated with the EES, an EES associated with the EAS corresponding to the second application.

In an optional implementation, after the transceiver 1405 is configured to receive the third message from the ECS, the processor 1401 is further configured to: determine, from the at least one EES based on an EAS bundle identifier corresponding to the second application and an EAS bundle identifier corresponding to the EAS associated with the EES, an EES associated with the EAS corresponding to the second application.

In an optional implementation, before the transceiver 1405 is configured to receive the third message from the ECS, the communication unit 1101 is further configured to send an edge computing platform discovery request message to the ECS, where the edge computing platform discovery request message is used to request to obtain at least one EES from the ECS, and the third message is an edge computing platform discovery response message

In an optional implementation, the edge computing platform discovery request message includes at least one of the following information: the application identifier of the second application and the EAS bundle identifier corresponding to the second application.

In another possible design, the processor 1401 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1401 may store instructions 1403, and the instructions 1403 are run on the processor 1401, so that the edge application server discovery apparatus 1400 may perform the method described in the foregoing method embodiment. The instructions 1403 may be built into the processor 1401. In this case, the processor 1401 may be implemented by using hardware.

In still another possible design, the edge application server discovery apparatus 1400 may include a circuit, and the circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

This embodiment of this application and the methods shown in FIG. 3A to FIG. 10 are based on a same concept, and technical effects brought by this embodiment of this application and the methods shown in FIG. 3A to FIG. 10 are also the same. For a specific principle, refer to the descriptions of the foregoing embodiments. Details are not described.

A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This application further provides a computer-readable storage medium, configured to store computer software instructions. When the instructions are executed by an edge application server discovery apparatus, a function of any one of the foregoing method embodiments is implemented.

This application further provides a computer program product, configured to store computer software instructions. When the instructions are executed by an edge application server discovery apparatus, a function of any one of the foregoing method embodiments is implemented.

This application further provides a computer program. When the computer program is run on a computer, a function in any one of the foregoing method embodiments is implemented.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An edge application server discovery method, wherein the method comprises:
sending, by an edge configuration server ECS, a second message to a source edge enabler server S-EES, wherein the second message is used to determine at least one edge enabler server EES, an edge application server EAS associated with the at least one EES corresponds to a first application, and the at least one EES corresponds to the first application.

2. The method according to claim 1, wherein before the sending, by an ECS, a second message to an S-EES, the method further comprises:
determining, by the ECS from the at least one EES based on an EAS bundle identifier of the first application and an EAS bundle identifier corresponding to the EAS associated with the EES, an EES associated with the EAS corresponding to the first application.

3. The method according to claim 1, wherein before the sending, by an ECS, a second message to an S-EES, the method further comprises:
determining, by the ECS from the at least one EES based on an application identifier of the first application and an application identifier corresponding to the EAS associated with the EES, an EES associated with the EAS corresponding to the first application.

4. The method according to any one of claims 1 to 3, wherein the second message further indicates a correspondence between the first application and the EAS associated with the at least one EES.

5. The method according to any one of claims 1 to 4, wherein the second message comprises at least one of the application identifier corresponding to the EAS associated with the at least one EES and the EAS bundle identifier corresponding to the EAS associated with the at least one EES.

6. The method according to any one of claims 1 to 5, wherein before the sending, by an ECS, a second message to an S-EES, the method further comprises:
receiving, by the ECS, an EES discovery request message from the S-EES, wherein the EES discovery request message is used to request to obtain the at least one EES from the ECS, wherein
the second message is an EES discovery response message.

7. The method according to claim 6, wherein the EES discovery request message comprises at least one of the following information: the application identifier of the first application and the EAS bundle identifier corresponding to the first application.

8. An edge application server discovery method, wherein the method comprises:
sending, by an edge enabler server EES, a fifth message to an edge configuration server ECS, wherein the fifth message comprises EES information, the EES information comprises EAS information of an EAS associated with the EES, and the EAS information comprises at least one of an application identifier corresponding to the EAS and an EAS bundle identifier corresponding to the EAS.

9. An edge application server discovery method, wherein the method comprises:
receiving, by a source edge enabler server S-EES, a first message from a target edge enabler server T-EES, wherein the first message is used to determine at least one edge application server EAS, and the at least one EAS corresponds to a first application.

10. The method according to claim 9, wherein the first message further indicates a correspondence between the at least one EAS and the first application.

11. The method according to claim 9, wherein the first message comprises at least one of an application identifier corresponding to an EAS and an EAS bundle identifier corresponding to the EAS

12. The method according to any one of claims 9 to 11, wherein after the receiving, by an S-EES, a first message from a T-EES, the method further comprises:
determining, by the S-EES from the at least one EAS based on an application identifier of the first application and the application identifier corresponding to the EAS, an EAS corresponding to the first application

13. The method according to any one of claims 9 to 11, wherein after the receiving, by an S-EES, a first message from a T-EES, the method further comprises:
determining, by the S-EES from the at least one EAS based on an EAS bundle identifier corresponding to the first application and the EAS bundle identifier corresponding to the EAS, an EAS corresponding to the first application

14. The method according to any one of claims 9 to 13, wherein before the receiving, by an S-EES, a first message from a T-EES, the method further comprises:
sending, by the S-EES, an EAS discovery request message to the T-EES, wherein the EAS discovery request message is used to request to obtain the at least one EAS from the T-EES, wherein
the first message is an EAS discovery response message

15. The method according to claim 14, wherein the EAS discovery request message comprises at least one of the following information: the application identifier of the first application and the EAS bundle identifier corresponding to the first application.

16. The method according to claim 14 or 15, wherein before the sending, by the S-EES, an EAS discovery request message to the T-EES, the method further comprises:
receiving, by the S-EES, a second message from an edge configuration server ECS, wherein the second message is used to determine at least one edge enabler server EES, an EAS associated with the at least one EES corresponds to the first application, the at least one EES corresponds to the first application, and the at least one EES comprises the T-EES.

17. The method according to claim 16, wherein the second message further indicates a correspondence between the first application and the EAS associated with the at least one EES.

18. The method according to claim 16, wherein the second message comprises at least one of an application identifier corresponding to the EAS associated with the at least one EES and an EAS bundle identifier corresponding to the EAS associated with the at least one EES.

19. The method according to any one of claims 16 to 18, wherein after the receiving, by the S-EES, a second message from an ECS, the method further comprises:
determining, by the S-EES from the at least one EES based on the application identifier of the first application and the application identifier corresponding to the EAS associated with the EES, an EES associated with the EAS corresponding to the first application.

20. The method according to any one of claims 16 to 18, wherein after the receiving, by the S-EES, a second message from an ECS, the method further comprises:
determining, by the S-EES from the at least one EES based on the EAS bundle identifier corresponding to the first application and the EAS bundle identifier corresponding to the EAS associated with the EES, an EES associated with the EAS corresponding to the first application.

21. The method according to any one of claims 16 to 20, wherein before the receiving, by the S-EES, a second message from an ECS, the method further comprises:
sending, by the S-EES, an EES discovery request message to the ECS, wherein the EES discovery request message is used to request to obtain the at least one EES from the ECS, wherein
the second message is an EES discovery response message

22. The method according to claim 21, wherein the EES discovery request message comprises at least one of the following information: the application identifier of the first application and the EAS bundle identifier corresponding to the first application.

23. An edge application server discovery method, wherein the method comprises:
receiving, by an edge configuration server ECS, a fifth message from at least one edge enabler server EES, wherein the fifth message comprises EES information, the EES information comprises EAS information of an EAS associated with the EES, and the EAS information comprises at least one of an application identifier corresponding to the EAS and an EAS bundle identifier corresponding to the EAS.

24. An edge application server discovery system, wherein the system is configured to implement the method according to any one of claims 1 to 7, or implement the method according to claim 8, or implement the method according to claims 9 to 22, or implement the method according to claim 23.

25. An edge application server discovery apparatus, comprising a memory and a processor, wherein
the memory is configured to store instructions or a computer program; and
the processor is configured to execute the computer program or the instructions stored in the memory, so that the apparatus performs the method according to any one of claims 1 to 7, or performs the method according to claim 8, or performs the method according to claims 9 to 22, or performs the method according to claim 23.

26. A computer-readable storage medium, wherein the computer-readable storage medium stores a computer program, and when the computer program is run, the method according to any one of claims 1 to 7 is implemented, or the method according to claim 8 is implemented, or the method according to claims 9 to 22 is implemented, or the method according to claim 23 is implemented.

27. A computer program product, wherein the computer program product comprises computer program code, and when the computer program code is run, the method according to any one of claims 1 to 7 is implemented, or the method according to claim 8 is implemented, or the method according to claims 9 to 22 is implemented, or the method according to claim 23 is implemented.
